(19) Europäisches Patentamt
European Patent Office
Office européen des brevets

(11) **EP 1 962 267 B1**

(12) **EUROPEAN PATENT SPECIFICATION**

(45) Date of publication and mention
of the grant of the patent:
**30.12.2009 Bulletin 2009/53**

(51) Int Cl.:
***G09G 3/32*** *(2006.01)*     *G09G 5/10* *(2006.01)*

(21) Application number: **08151806.0**

(22) Date of filing: **22.02.2008**

(54) **Organic light emitting display and method of controlling the same**

Organische lichtemittierende Anzeige und dazugehöriges Ansteuerverfahren

Affichage luminescent organique, et procédé associé

(84) Designated Contracting States:
**DE FR GB HU IT PL**

(30) Priority: **23.02.2007 KR 20070018701**

(43) Date of publication of application:
**27.08.2008 Bulletin 2008/35**

(73) Proprietor: **Samsung Mobile Display Co., Ltd.**
**Suwon-si**
**Gyeonggi-do (KR)**

(72) Inventors:
• **Song, June-Young**
**Gyeonggi-do (KR)**

• **Park, Young-Jong**
**Gyeonggi-do (KR)**
• **Lee, Jang-Doo**
**Gyeonggi-do (KR)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) References cited:
**EP-A- 1 717 788**     **US-A1- 2003 210 256**
**US-A1- 2003 218 583**     **US-A1- 2006 055 335**
**US-A1- 2006 055 828**

## Description

BACKGROUND OF THE INVENTION

1. Field of the Invention

Embodiments of the present invention relate to an organic light emitting display. More particularly, embodiments relate to an organic light emitting display capable of reducing power consumption and/or improving the visibility of a field, a controller therefore, and associated methods.

Description of the Related Art

Flat panel displays, e.g., liquid crystal displays (LCD), field emission displays (FED), plasma display panels (PDP), organic light emitting displays, and so forth, may be advantageous in having reduced weight and volume, small thickness, and excellent color reproducibility, as compared to cathode ray tube (CRT) displays. Accordingly, such flat panel displays may be used in, e.g., personal digital assistants (PDAs), MP3 players, digital still cameras (DSCs), portable phones, and so forth.

Organic light emitting displays may include an organic light emitting diode (OLED) between electrodes, so that application of voltage to the electrodes may cause re-combination of electrons and holes in the OLED, thereby emitting light to form images. Emission of light from the OLED may be controlled by an amount of current therethrough. For example, emission of bright light by the OLED may require a relatively large amount of current therethrough.

However, use of a large amount of current through the OLED may trigger high power consumption by the organic light emitting display. Further, reduction of power consumption of the organic light emitting display, while using high current through the OLED, may require decrease of a drive voltage of an image, thereby distorting display quality thereof, e.g., an undesirable portion of the image may become dark.

Moreover, when used in portable display devices, the organic light emitting display may be exposed to various environments. Thus, the visibility of the image displayed on the portable display device may be changed according to an ambient environment, e.g., ambient illumination. In particular, the visibility in the image on the portable display device may be extremely reduced in environments that are brighter than the image on the display, e.g. in the sunlight,.

Therefore, there is a need for a portable display device, in particular, an organic light emitting display, having improved visibility in bright ambient environments.

The patent EP 1 717 788 A2 discloses an active matrix OLED display, wherein an optical sensor measures the ambient light level and a controller adjusts the gamma voltages accordingly. A further controller changes the light emission period and thus the display brightness according to the average picture level of one frame of image data. The claims have been characterized with respect to this document.

The patent US 2006 / 0 055 828 A1 discloses a display, wherein grey levels are gamma corrected according to the ambient light level.

The patent US 2006 / 055 335 A1 discloses an OLED display, wherein characteristics like the maximum gradation, minimum gradation, and average picture level of the input image signal are determined and are used for adjusting the gradations with respect to contrast, DC-level and gamma. In addition, if a small white pattern surrounded by a black background is displayed at the same position in a low average-luminance screen for a long period of time, a luminance control circuit lowers the luminance of the white pattern after a certain period of time to reduce burn-in.

The patent US 2003 /0 210 256 A1 discloses an OLED display, wherein the gradations of the input image signal are scaled depending on the degree of motion and the luminance of the input image frames. For still images, the image brightness is gradually reduced. For motion images or dark areas, the scaling factor is kept at a high level.

## SUMMARY OF THE INVENTION

Embodiments of the present invention are therefore directed to an organic light emitting display, a controller therefor, and associated methods, which substantially overcome one or more of the disadvantages of the related art.

It is therefore a feature of an embodiment of the present invention to provide an organic light emitting display capable of reducing power consumption, a controller therefor, and associated methods.

It is therefore another feature of an embodiment of the present invention to provide an organic light emitting display capable of improving image visibility, a controller therefore, and associated methods.

At least one of the above and other features and advantages may be realized by providing an organic light emitting display according to claim 1, and a method of controlling an organic light emitting display according to claim 17.

Preferred embodiment are defined in the dependent claims.

## BRIEF DESCRIPTION OF THE DRAWINGS

The above and other features and advantages of the present invention will become more apparent to those of ordinary skill in the art by describing in detail exemplary embodiments thereof with reference to the attached drawings, in which:

FIG. 1 illustrates a block diagram of an organic light emitting display according to an embodiment of the present invention;
FIG. 2 illustrates a block diagram of the first controller shown in FIG. 1 according to an embodiment;
FIG. 3 illustrates a schematic view of the A/D converter shown in FIG. 2 according to an embodiment;
FIG. 4 illustrates the gamma compensation circuit shown in FIG. 2 according to an embodiment;
FIG. 5A and FIG. 5B illustrate gamma curves according to the gamma compensation circuit shown in FIG. 4;
FIG. 6 illustrates a block diagram of the second controller shown in FIG. 1 according to an embodiment;
FIG. 7A to FIG. 7D illustrate an example calculating destination saturation data by sub pixels using a saturation change matrix by a first calculator shown in FIG. 6 according to an embodiment;
FIG. 8 illustrates a block diagram of the third controller shown in FIG. 1 according to an embodiment;
FIG. 9 illustrates a flow chart of an operation of the third controller shown in FIG. 8 according to an embodiment;
FIG. 10 illustrates a schematic view of an operation of the image analyzer shown in FIG. 8 according to an embodiment;
FIG. 11A to FIG. 11D illustrate graphs of scale ratios with respect to gradient magnitude, pixel locations, speed between frames, and luminance, respectively;
FIG. 12 illustrates a block diagram of the fourth controller shown in FIG. 1 according to an embodiment; and
FIG. 13 illustrates the look-up table shown in FIG. 12 according to an embodiment.

## DETAILED DESCRIPTION OF THE INVENTION

Embodiments of the present invention will now be described more fully hereinafter with reference to the accompanying drawings, in which exemplary embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

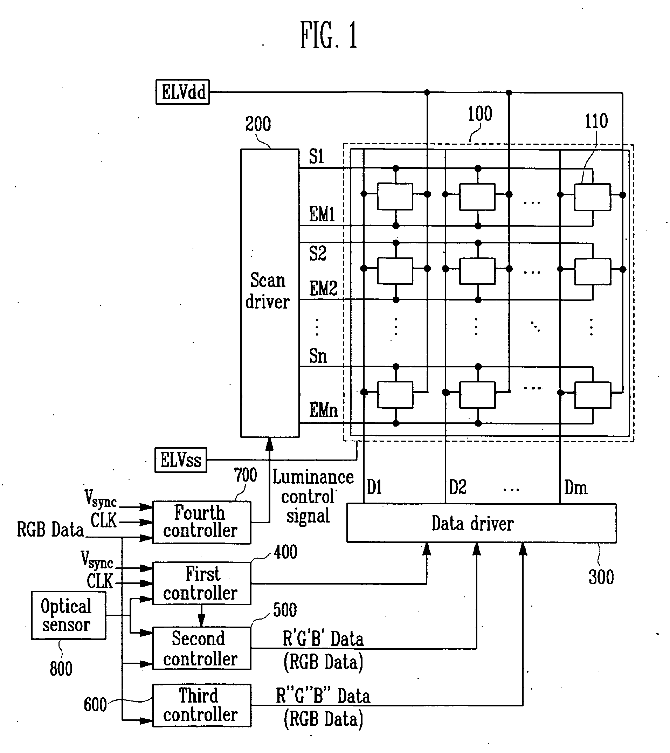

FIG. 1 illustrates a block diagram of an organic light emitting display according to an embodiment of the present invention. With reference to FIG. 1, the organic light emitting display may include a pixel unit 100, a scan driver 200, a data driver 300, first to fourth controllers 400, 500, 600, and 700, and an optical sensor 800.

The pixel unit 100 may include a plurality of pixels 110, which are coupled to scan lines S1 to Sn, emission control lines EM1 to EMn, and data lines D1 to Dm. Each of the pixels 110 may include an OLED, and may be composed of at least two sub pixels for emitting light of different colors. The pixel unit 100 may display images according to a first voltage ELVdd and a second voltage ELVss supplied from external power sources, a scan signal and an emission control signal supplied from the scan driver 200, and a data signal supplied from the data driver 300.

The scan driver 200 may generate the scan signal and the emission control signal. The scan signal generated by the scan driver 200 may be sequentially provided to respective scan lines S1 to Sn. The emission control signal generated by the scan driver 200 may be sequentially provided to respective emission control lines EM1 to EMn. The emission control signal may be controlled by a luminance control signal provided from the fourth controller 700. An entire brightness in the pixel unit 100 may be adjusted according to a pulse width change in the controlled emission control signal.

The data driver 300 may receive image data converted by at least one of the first and second controllers 400 and 500, and may generate a corresponding data signal. The data signal generated by the data driver 300 may be supplied to the data lines D1 to Dm in synchronization with the scan signal to be transferred to each pixel 110.

The optical sensor 800 may include a transistor or an optical sensing device, such as a photo diode, which senses the intensity of ambient light and generates an optical sensing signal Ssens. The optical sensing signal Ssens generated by the optical sensor 800 may be provided to the first controller 400 and/or the second controller 500.

The first controller 400 may generate a sensing signal corresponding to a the optical sensing signal Ssens from the optical sensor 800, select a gamma value according to the sensing signal, and output a gamma compensation signal corresponding to the selected gamma value. Thus, the first controller 400 may adjust a gradation voltage of the data signal, thereby controlling a brightness of the pixel unit 100.

When reducing a drive voltage of an image, so as to reduce power consumption of the organic light emitting display in which an emission degree changes according to a change of a current amount, part of the image may become dark, degrading image quality. The first controller 400 may solve the aforementioned problems by adjusting the gradation voltage.

The second controller 500 may compare the optical sensing signal Ssens from the optical sensor 800 with a previously set reference value and generate a selection signal for selecting one of at least three modes according to a comparison result. The second controller 500 may store input image data RGB Data and changed data R'G'B' Data. The changed data R'G'B' Data may be obtained by changing the input image data RGB Data.

In detail, the second controller 500 may determine how the input image data RGB Data is to be changed according to the optical sensing signal Ssens from the optical sensor 800, and generate and store changed data R'G'B' Data. Here, the changed data R'G'B' Data may be obtained by changing a luminance value and/or saturation value of the input image data RGB Data. When changing the input image data RGB Data, the second controller 500 may apply at least two modes corresponding to the selection signal to generate the changed data R'G'B' Data. The changed data R'G'B' Data or the input image data RGB Data may then be provided to the data driver 300.

When ambient illumination is equal to or greater than the reference value, e.g., sunlight, the second controller 500 may generate the changed data R'G'B' Data in order to improve visibility of the image on the display. The changed data R'G'B' Data may be obtained by increasing a saturation of the input image data RGB Data. When generating the changed data R'G'B' Data, one of at least two modes, determined in accordance with ambient illumination, for controlling a change of the input image data RGB Data may be selected to generate the change data R'G'B' Data.

When the ambient illumination is less than the reference value, the first controller 400 may operate. When the ambient illumination is equal to or greater than the reference value, the second controller 500 may operate.

The third controller 600 may generate and apply a scaling factor to the input image data RGB Data through extraction of features related to the input image data RGB Data and a scale ratio obtained from the extracted features, and transfer the scaled image data R"G"B" Data to the data driver 300. Only one of the second controller 500 and the third controller 600 may operate at one time, so that only one of the changed data R'G'B' Data output by the second controller 500 and the scaled data R"G"B" Data output by the third controller 600 is provided to the data driver 300.

The fourth controller 700 may provide a luminance control signal for adjusting a pulse width of an emission control signal from the scan driver 200 to scan lines S1 to Sn. The fourth controller 700 may adjust an amount of an electric current flowing to the pixel unit 100 and prevent an electric current greater than a predetermined set value from flowing to the pixel unit 100, thereby adjusting luminance of the entire pixel unit 100.

The organic light emitting display described above may provide reduced power consumption and/or improved visibility by operation of one or more of the first to fourth controllers 400, 500, 600, and 700. A detailed construction and operation of the first to fourth controllers 400, 500, 600, and 700 will be explained in detail with reference to the accompanying drawings.

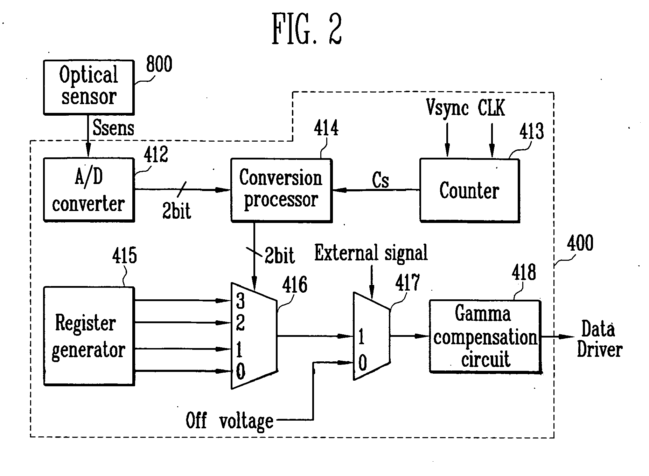

FIG. 2 illustrates a block diagram of the first controller 400 shown in FIG. 1 in accordance with an embodiment. With reference to FIG. 2, the first controller 400 may include an A/D converter 412, a counter 413, a conversion processor 414, a register generator 415, a first selector 416, a second selector 417, and a gamma compensation circuit 418.

The A/D converter 412 may compare the optical sensing signal Ssens from the optical sensor 800 with a set reference voltage, and output a corresponding digital sensing signal. For example, ambient illumination may be classified into first through fourth illumination states of decreasing illumination and may be characterized by 2-bit data. The A/D converter 412 may output a sensing signal of '11' when ambient light is in the first, i.e., brightest, illumination state. The A/D converter 412 may output a sensing signal of '10' when ambient light is in a second illumination state. The A/D converter 412 may output a sensing signal of '01' when ambient light is in a third illumination state. The A/D converter 412 may output a sensing signal of '00' when ambient light is in the fourth, i.e., darkest, illumination state.

The counter 413 may count a predetermined number for a predetermined time according to externally supplied vertical synchronous signal Vsync and output a counting signal Cs. When the counter 413 is a 2-bit counter, the counter 413 may be initialized with '00' when the vertical synchronous signal Vsync is input thereto, and may sequentially shifts a clock signal CLK to count to '11'. Through the aforementioned operation, the counter 413 may sequentially count from '00' to '11' during one frame period, and output the counting signal Cs corresponding to the counted number to the conversion processor 414.

The conversion processor 414 may output a control signal to select a set value of each register using the counting signal Cs from the counter 413 and the digital sensing signal from the A/D converter 412. The conversion processor 414 may output the control signal corresponding to the digital sensing signal and maintain the control signal during one frame period as determined by the counter 413. During a next frame period, the conversion processor 414 may reset the control signal to be output, and output and maintain the control signal corresponding to the digital sensing signal from the A/D converter 412 during the next frame period.

For example, when the ambient light is in the first or brightest state, the conversion processor 414 may output a control signal corresponding to the digital sensing signal '11' and maintain the control signal during one frame period while the counter 413 counts. When the ambient light is in the fourth or darkest state, the conversion processor 414 may output a control signal corresponding to the digital sensing signal '00' and maintain the control signal during one frame period while the counter 413 counts. In the same manner, when the ambient light in the second or bright state, or in the third or dark state, the conversion processor 414 may output the control signal corresponding to the sensing signal '10' or '01', respectively, and maintain the control signal during one frame period while the counter 413 counts.

The register generator 415 may classify a brightness of ambient light into a plurality of stages and store a plurality of register set values corresponding to the respective stages. The first selector 416 may select a register set value among the plurality of register set values stored in the register generator 415 according to the control signal set by the conversion processor 414. The second selector 417 may receive an externally supplied 1-bit signal for controlling on/off state of the first controller 400. When the second selector 417 selects '1', the first controller 400 may operate. When the second selector 417 selects '0', the first controller 400 may be turned off, so that the brightness may be selectively controlled according to ambient light.

The gamma compensation circuit 418 may generate a plurality of gamma compensation signals corresponding to a register set value selected according to the control signal set by the conversion processor 414. Since the control signal corresponds to the optical sensing signal Ssens output from the optical sensor 800, the gamma compensation signal has a different value according to the ambient illumination.

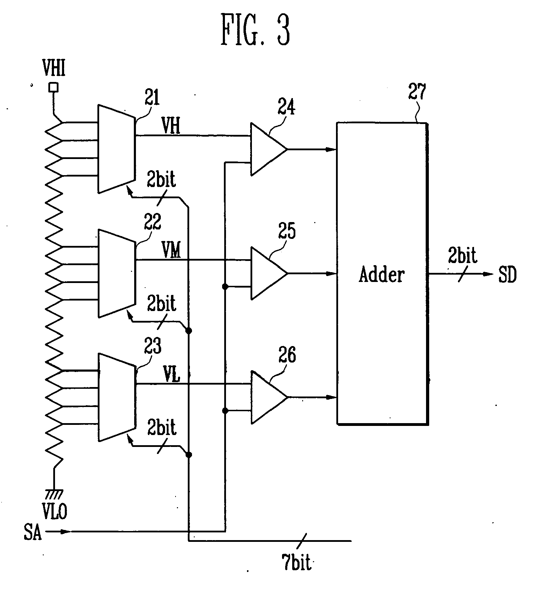

FIG. 3 illustrates an A/D converter 412 shown in FIG. 2 in accordance with an embodiment. With reference to FIG. 3, the A/D converter 412 may include first to third selectors 21, 22, and 23, first to third comparators 24, 25, and 26, and an adder 27.

The first to third selectors 21, 22, and 23 may receive a plurality of gradation voltages VHI to VLO divided through a plurality of resistor rows for generating a plurality of gradation voltages VHI to VLO, and output gradation voltages corresponding to different set values of 2 bits, which are referred to as 'reference voltages VH to VL'.

The first comparator 24 may compare an analog sensing signal SA, i.e., the optical sensing signal Ssens, with a first reference signal VH and output a comparison result. For example, when the analog sensing signal SA is greater than the first reference signal VH, the first comparator 24 outputs '1'. When the analog sensing signal SA is less than or equal to the first reference signal VH, the first comparator 24 outputs '0'.

In the same manner, the second comparator 25 may compare the analog sensing signal SA with a second reference signal VM and output a comparison result. The third comparator 26 may compare an analog sensing signal SA with a third reference signal VL and output a comparison result. By changing the first to third reference voltages VH to VL, a range of analog sensing signals SA corresponding to a digital sensing signal SD may be altered. The adder 27 may add all output values of the first to third comparators 24 to 26 to output a 2-bit digital sensing signal SD.

Operation of the A/D converter 412 in FIG. 3 will be explained assuming that the first reference voltage VH is 3V, the second reference voltage VM is 2V, the third reference voltage VL is 1V, and the greater a voltage value of the analog sensing signal SA is, the brighter the ambient light. When the analog sensing signal SA is less than 1V, the first to third comparators 24 to 26 output '0','0', and '0', respectively. Accordingly, the adder 27 outputs a digital sensing signal SD of '00'. When the analog sensing signal SA is between 1V and 2V, the first to third comparators 24 to 26 output '0','0', and '1', respectively. Accordingly, the adder 27 outputs a digital sensing signal SD of '01'. When the analog sensing signal SA is between 2V and 3V, the first to third comparators 24 to 26 output '0','1', and '1', respectively. Accordingly, the adder 27 outputs a digital sensing signal SA of '10'. When the analog sensing signal SA is greater than 3V, the first to third comparators 24 to 26 output '1','1', and '1', respectively. Accordingly, the adder 27 outputs a digital sensing signal SA of '11'. The, A/D converter 212 may operate in the aforementioned manner to classify ambient illumination into the four states discussed above. In detail, the A/D converter 212 may output '00' in the fourth or darkest state, '01' in the third or dark state, '10' in the second or bright stage, and '11' in the first or brightest state.

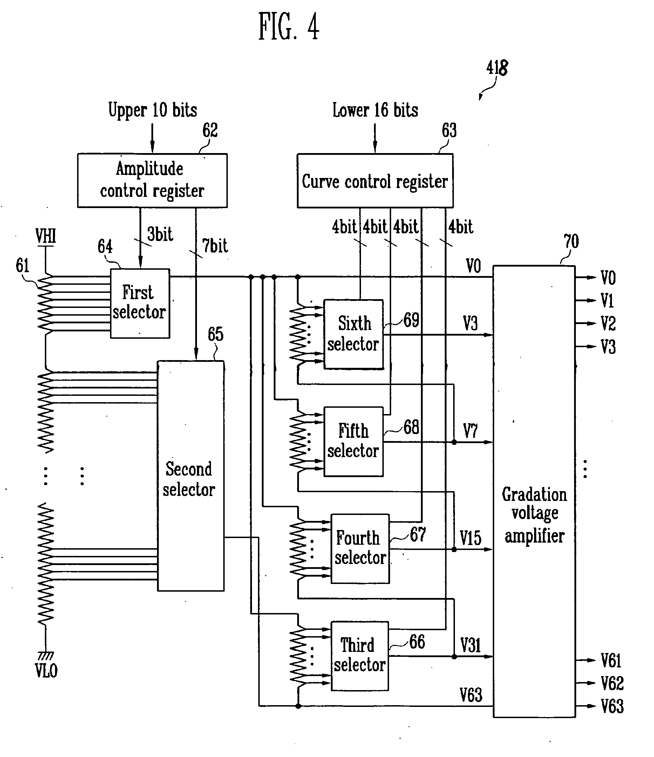

FIG. 4 illustrates the gamma compensation circuit 418 shown in FIG. 2 according to an embodiment. With reference to FIG. 4, the gamma compensation circuit 418 may include a ladder resistor 61, an amplitude control register 62, a curve control register 63, a first selector 64 to a sixth selector 69, and a gradation voltage amplifier 70.

An externally supplied highest level voltage VHI may be defined as a reference voltage. The ladder resistor 61 may include a plurality of variable resistors coupled between a lowest level voltage VLO and the reference voltage in series. A plurality of gradation voltages may be generated by the ladder resistor 61. When a resistance of the ladder resistor 61 decreases, an amplitude control range descreases, but control precision increases. When a resistance of the ladder resistor 61 increases, an amplitude control range increases, but control precision decreases.

The amplitude control register 62 may output a register set value of 3 bits to the first selector 64, and a register set value of 7 bits to the second selector 65. Here, an increase in the set bit number increases the gradation number to be selected. A change in the register set value causes a gradation voltage to be differently selected.

The curve control register 63 may output a register set value of 4 bits to each of the third selector 66 to the sixth selector 69, respectively. Here, the register set value may be changed. Further, a gradation voltage to be selected may be controlled according to the register set value.

Upper 10-bits among register values generated by the register generator 415 may be input to the amplitude control register 62. Lower 16 bits thereof may be input to the curve control register 63 to be selected as a register set value.

The first selector 64 may select a gradation voltage among the plurality of gradation voltages divided through the ladder resistor 61 corresponding to the register set value of 3 bits set by the amplitude control register 62. The selected gradation voltage output by the first selector 64 may be the most significant gradation voltage.

The second selector 65 may select a gradation voltage among the plurality of gradation voltages divided through the ladder resistor 61 corresponding to the register set value of 7-bits set by the amplitude control register 62. The selected gradation voltage output by the second selector 65 may be the least significant gradation voltage.

The third selector 66 may divide a voltage between the gradation voltage output from the first selector 64 and the gradation voltage output from the second selector 65 into a plurality of gradation voltage through a plurality of resistor rows, and select and output a gradation voltage corresponding to a register set value of 4 bits.

The fourth selector 67 may divide a voltage between the gradation voltage output from the first selector 64 and the gradation voltage output from the third selector 66 into a plurality of gradation voltage through a plurality of resistor rows, and selects and outputs a gradation voltage corresponding to a register set value of 4 bits.

The fifth selector 68 may select and output a gradation voltage among a plurality of gradation voltages between the first selector 64 and the fourth selector 67 corresponding to a register set value of 4 bits.

The sixth selector 69 may select and output a gradation voltage among a plurality of gradation voltages between the first selector 64 and the fifth selector 68 corresponding to a register set value of 4 bits.

Through the aforementioned operation, slope of an intermediate portion of a gradation curve may be adjusted according to a register set value of the curve control register 63, so that gamma characteristics may easily adjusted in accordance with individual sub-pixel features. When a small gradation is displayed, a potential difference between gradations may be increased, making the gamma curve downwardly convex. When a large gradation is displayed, a potential difference between gradations may be increased, making gamma curve upwardly convex.

The gradation voltage amplifier 70 may output a plurality of gradation voltages corresponding to each of a plurality of gradations displayed on the pixel unit 100. FIG. 4 shows an output of gradation voltages V0 to V63 corresponding to 64 gradations.

In the aforementioned operation, variations in characteristics of R, G, and B OLEDs may be compensated. For example, gamma compensation circuits may be installed by R, G, and B groups to substantially or completely equalize respective luminance characteristics. Thus, an amplitude and a curve of the gamma curve may be different for R, G, and B OLEDs using the curve control register 63 and the amplitude control register 62.

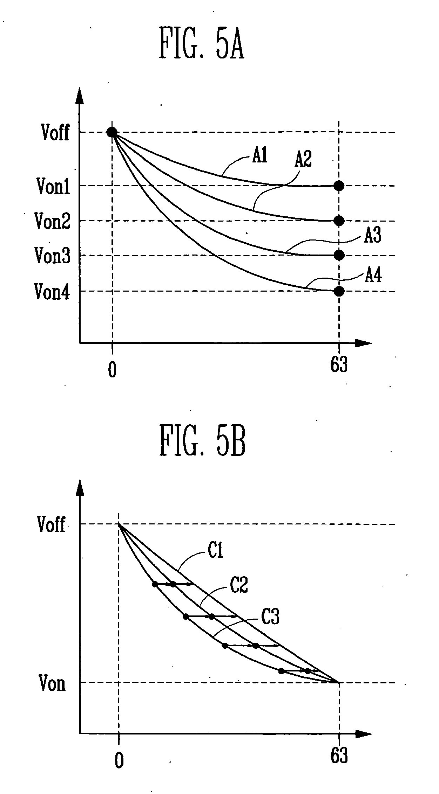

FIG. 5A and FIG. 5B illustrate gamma curves output by the gamma compensation circuit shown in FIG. 4 in accordance with an embodiment.

FIG. 5A shows gamma curves that change a lower level gradation voltage according to a register set value of 7-bits without changing an upper level gradation voltage in order to adjust the amplitude of the lower level gradation voltage. Gamma curve A1 corresponds to the first state, i.e., brightest ambient illumination. Gamma curve A2 corresponds to the third state, i.e., dark ambient illumination. Gamma curve A3 corresponds to the second state, i.e., bright ambient illumination. Gamma curve A4 corresponds to the fourth state, i.e., darkest ambient illumination.

Referring back to FIG. 4, in order to reduce an amplitude voltage of a gradation voltage, a register set value of the amplitude control register 62 may be adjusted so that the second selector 65 selects the highest level voltage VHI. In order to increase the amplitude voltage of a gradation voltage, the second selector 65 may select the lowest level voltage VLO.

FIG. 5B shows gamma curves that change only a gradation voltage of a middle level without changing the upper level gradation voltage and the lower level gradation voltage according to a register set value set by the curve control register 63. When a register set value of 4-bits is input to the third selector 66 to the sixth selector 69, they select fourth gamma values corresponding to a register set value to generate a gamma curve. An off voltage Voff is a voltage corresponding to a black gradation (gradation value of 0), and an on voltage Von is a voltage corresponding to a white gradation (gradation value of 63). A slope change degree of reference numeral C2 curve is greater than a slope change degree of a curve corresponding to C1, but is less than that of a C3 curve.

A set value of a gamma control register may be changed as illustrated in FIG. 5A and FIG. 5B to change a gradation voltage, thereby generating a gamma curve. Accordingly, brightness of each pixel 110 in the pixel unit 100 may be adjusted.

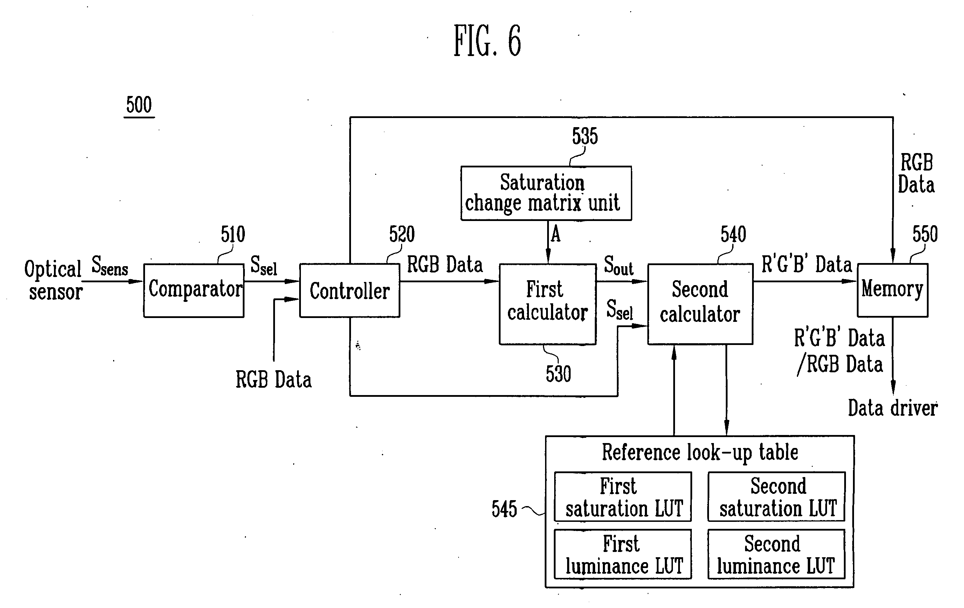

FIG. 6 illustrates a block diagram of the second controller 500 shown in FIG. 1 according to an embodiment. With reference to FIG. 6, the second controller 500 may include a comparator 510, a controller 520, a first calculator 530, a saturation change matrix unit 535, a second calculator 540, a reference look-up table unit 545, and a memory 550.

The comparator 510 may compare the optical sensing signal Ssens, received from either the optical sensor 800 or the first controller 400, with a previously set reference value and output a selection signal Ssel to select one of at least three modes. In detail, the comparator 510 may set at least three modes based on the reference value corresponding to a magnitude of the optical sensing signal Ssens, and output the selection signal Ssel. For convenience of the description, hereinafter, an embodiment will be explained assuming that the comparator 510 sets three modes in accordance with the optical sensing signal Ssens.

When the optical sensing signal Ssens is within a minimum range above the previously set reference value, i.e., when ambient illumination is within a weakest range, the comparator 510 may set a first mode, in which input image data RGB Data is not changed, and output a corresponding selection signal Ssel. When the optical sensing signal Ssens is within a maximum range above the previously set reference value, i.e., when ambient illumination is strongest, e.g., direct sunlight, the comparator 510 may set a third mode in which a saturation and/or luminance of the input image data RGB Data is maximally changed, and output a corresponding selection signal Ssel.

In a remaining case, i.e., when the optical sensing signal Ssens is between an upper limit of the minimum range and a lower limit of the maximum range above the previously set reference value, e.g., indirect sunlight, the comparator 510 may set a second mode in which the saturation and/or luminance of the input image data RGB Data is changed, and output a corresponding selection signal Ssel. The luminosity of the changed input image data RGB Data in the second mode is set to a lower value than in the third mode.

In an embodiment, when the ambient luminance is less than the set reference value, the first controller 400 may operate. When the ambient luminance is equal to or greater than the set reference value, the second controller 500 may operate. Accordingly, the second controller 500 may substantially operate in the second mode and the third mode.

The selection signal Ssel output from the comparator 510 may be received by the controller 520. The controller 520 may determine a degree of change, including none, to the input image data RGB Data corresponding to the selection signal Ssel from the comparator 510.

The controller 520 may transfer the input image data RGB Data to the first calculator 530 or store the input image data RGB Data in the memory 450 according to whether the input image data RGB Data is to be changed. For example, when the ambient illumination is within the weakest range above the set reference value, i.e., the first mode is selected; the controller 520 may store the input image data RGB Data in the memory 550. When the second or third mode is selected, the controller 520 may transfer the input image data RGB Data to the first calculator 530 and the selection signal Ssel to the second calculator 540.

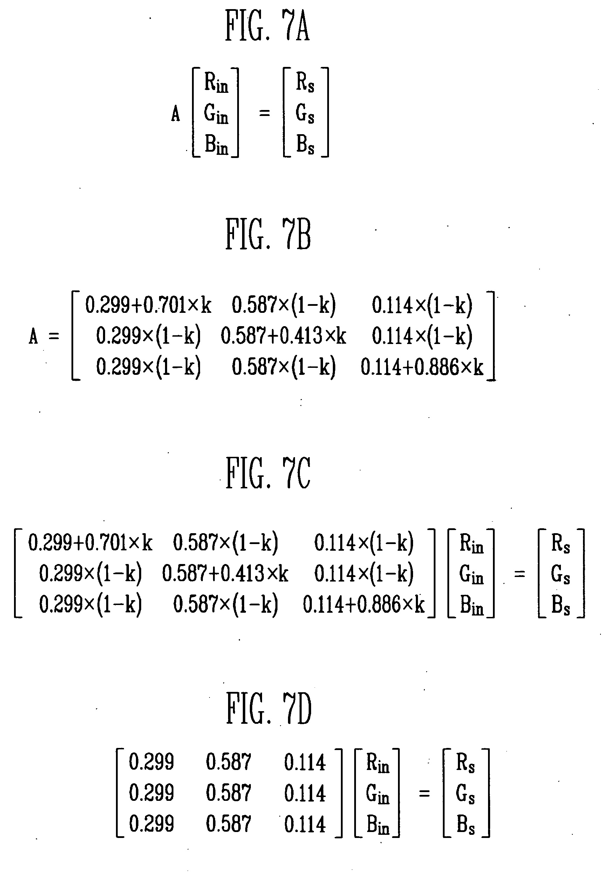

The first calculator 530 may generate a pixel saturation data Sout corresponding to the input image data RGB Data from the controller 520 by referring the saturation change matrix unit 535. For example, the first calculator 530 may multiply input data Rin, Gin, and Bin by sub pixels with a saturation change matrix A output from the saturation change matrix unit 535 to obtain saturation data Rs, Gs, and Bs by sub pixels, and may generate the pixel saturation data Sout accordingly. A method for calculating the saturation data Rs, Gs, and Bs by sub pixels will be explained later with reference to FIG. 7A to FIG. 7D.

The pixel saturation data Sout may be calculated from the saturation data Rs, Gs, and Bs by sub pixels. For example, the pixel saturation data Sout may be set to a maximum value among the saturation data Rs, Gs, and Bs by sub pixels or to a predetermined value corresponding to a difference between a maximum value and a minimum value of the saturation data Rs, Gs, and Bs by sub pixels.

The pixel saturation data Sout generated by the first calculator 530 may be output to the second calculator 540. The second calculator 540 may extract the change data R'G'B' Data from the reference look-up table unit 545 corresponding to the pixel saturation data Sout supplied from the first calculator 530, and may store the changed data R'G'B' Data in the memory 550.

In detail, the second calculator 540 may select one of a first saturation and luminance look-up table (LUT) and a second saturation and luminance LUT in the reference look-up table unit 545 in accordance with the selection signal Ssel. Then, the second calculator 540 may extract the changed data R'G'B' Data having saturation and luminance values in accordance with the pixel saturation data Sout from the selected LUTs. The saturation LUT and the luminance LUT are tables having a saturation change value and a luminance change value for each pixel saturation data Sout.

Different saturation and/or luminance values may be stored in the first saturation and luminance LUT and the second saturation and luminance LUT corresponding to the same pixel saturation data Sout. For example, the first saturation and luminance LUT to be selected in the second mode may have lower saturation and/or luminance values stored therein than the second saturation and luminance LUT to be selected in the third mode.

When the pixel saturation data Sout not stored in the reference look-up table unit 545 is input, the second calculator 540 may extract the changed data R'G'B' Data using two values adjacent to the pixel saturation data Sout among values stored in the reference look-up table unit 545. For example, the second calculator 540 may linearly interpolate values corresponding to a maximum value among values less than input pixel saturation data Sout and a minimum value among values greater than the pixel saturation data Sout in order to extract the changed data R'G'B' Data.

The memory 550 may store the input image data RGB Data from the controller 520 or the changed data R'G'B' Data from the second calculator 540. The input image data RGB Data or the changed data R'G'B' Data stored in the memory 550 may be output to the data driver 300.

FIG. 7A to FIG. 7D illustrate examples of calculating destination saturation data by sub pixels using a saturation change matrix A output by the saturation change matrix unit 535. With reference to FIG. 7A to FIG. 7D, the first calculator 530 may multiply the saturation change matrix A by input data Rin, Gin, and Bin by sub pixels included in the input image data RGB Data to obtain saturation data Rs, Gs, and Bs by sub pixels.

The saturation change matrix A adjusts a saturation using a saturation factor k. The saturation change matrix A may be used to convert values of the input data Rin, Gin, and Bin by sub pixels by a previously set saturation factor k so as to calculate the saturation data Rs, Gs, and Bs by sub pixels.

The saturation change matrix A may be determined in accordance with a white balance of a pixel. A matrix as shown in FIG. 7B is generally used as the saturation change matrix A. Thus, the first calculator 530 may multiply the saturation change matrix A shown in FIG. 7B by input data Rin, Gin, and

Bin by sub pixels to obtain the saturation data Rs, Gs, and Bs by sub pixels.

When the saturation factor k is greater than 1, the saturation is increased. When the saturation factor k is less than 1 and greater than 0, the saturation is reduced. When the saturation factor k is less than 0, color may be inverted. When the saturation factor k is 1, since the saturation change matrix A becomes a 3×3 unit matrix, the saturation is not changed.

Moreover, when the saturation factor k is zero, as shown in FIG. 7D, all saturation data Rs, Gs, and Bs by sub pixels equal a white balance. Thus, an image displayed using such saturation data Rs, Gs, and Bs will be monochromatic.

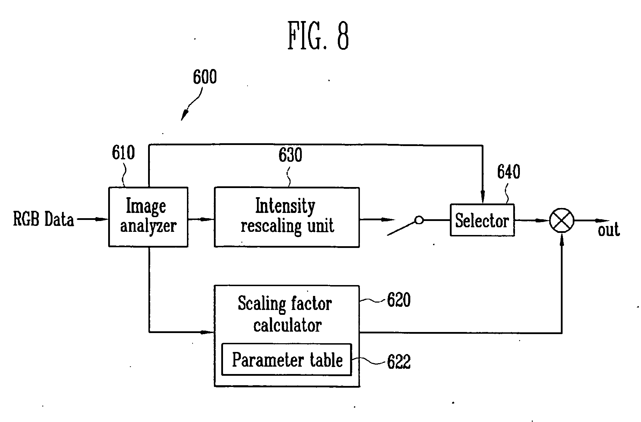

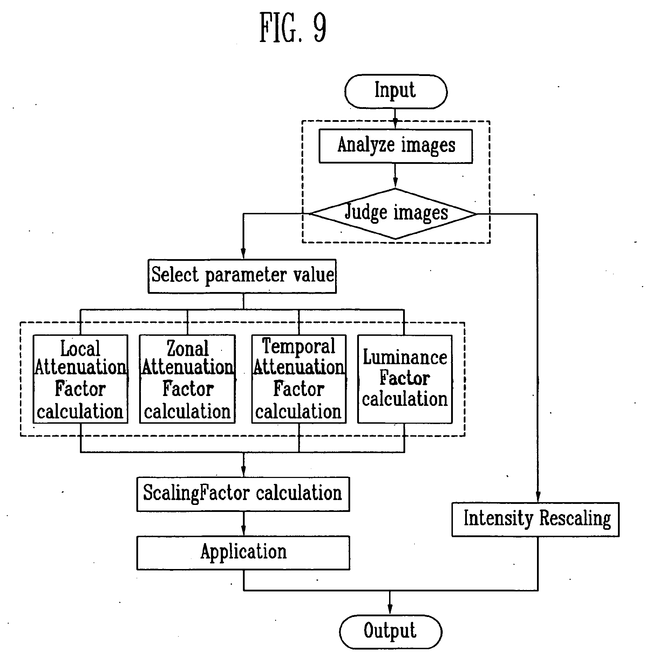

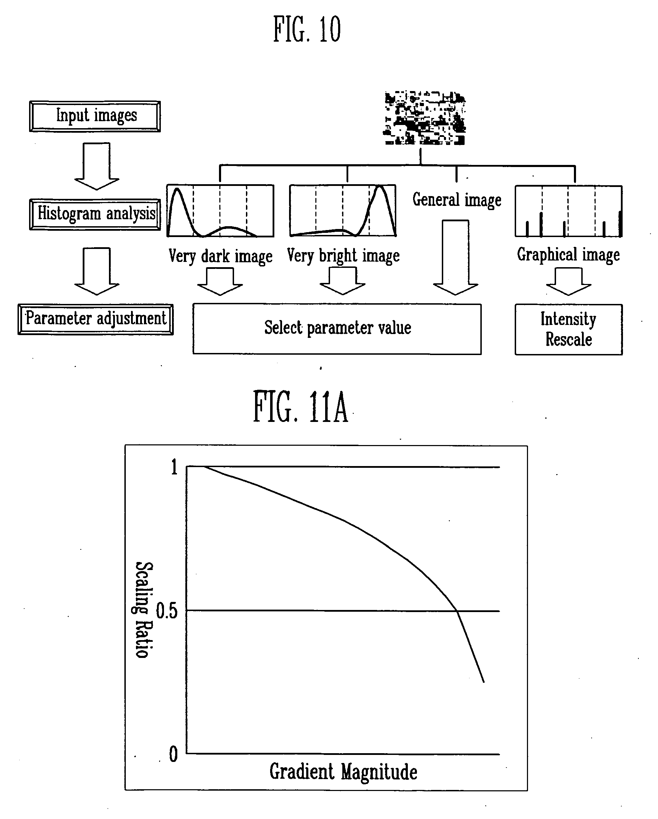

FIG. 8 illustrates a block diagram of the third controller 600 shown in FIG. 1 in accordance with an embodiment. FIG. 9 illustrates a flow chart of operation of the third controller 600 shown in FIG. 8 in accordance with an embodiment. FIG. 10 illustrates operation of an image analyzer 610 shown in FIG. 8 in accordance with an embodiment.

With reference to FIG. 8, the third controller 600 includes the image analyzer 610, a scaling factor calculator 620, an intensity rescaling unit 630, and a selector 640. The scaling factor calculator 620 may include a parameter table 622 that stores a parameter value for determining scale intensity upon calculating a scaling factor.

The image analyzer 610 may analyze the input image data RGB Data. The scaling factor calculator 620 may generate a scaling factor with respect to the input image data RGB Data and produce scaled-down image data. The intensity rescaling unit 630 may adjust an overall intensity level of the input image data RGB Data.

The selector 640 may select whether or not an output value of the intensity rescaling unit 630 is reflected in a final output of the third controller 600. The image analyzer 610 may control the selector 640. Thus, an output of the scaling factor calculator 620 and/or of the intensity rescaling unit 630 may be output from the third controller 600 to the data driver 300 as the image data signal in accordance with operation of the selector 640.

Operation of the third controller 600 in accordance with an embodiment will be explained with reference to FIGS. 8 to 10. The image analyzer 610 may receive and analyze the input image data in terms of type and properties. More specifically, the image analyzer 610 may receive the input image data RGB Data, and may extract luminance components thereof to generate histograms. Luminance components may be extracted from the input image data RGB Data according to Equation 1 below,

$$Y = MAX(R,G,B)$$

$$(1)$$

where Y indicates luminance and equals a maximum value of R, G, and B data applied to respective sub pixels of a pixel corresponding to the input image data RGB Data. For example, the image analyzer 610 may extract maximum levels of luminance of each of R, G, and B sub pixels of each pixel in the input image data, and may generate a histogram, e.g., a luminance histogram, illustrating brightness and color distribution within the input data image.

Input image data RGB Data may be classified according to the luminance histogram, as, e.g., a very dark image, a very bright image, a general image, and/or a graphical image, as illustrated in FIG. 10. The input image data RGB Data may be transmitted to the scaling factor calculator 620 and/or to the intensity rescaling unit 630.

In accordance with image classification, when the image is judged to be one of a very dark image, a very bright image, or a general image, the image data may be transmitted to the scaling factor calculator 620 in order to select parameter values, as indicated in FIG. 9. As illustrated in more detail in FIG. 9, the scaling factor calculator 620 may calculate attenuation factors, calculate a scaling factor, and apply the scaling factor to the input image data. When the image data is judged to be a graphical image, the image data may be transmitted to the intensity rescaling unit 630, as illustrated in FIGS. 8 and 10, in order to scale the intensity of the image data, as indicated in FIG. 9.

The scaling factor calculator 620 of the third controller 600 may receive the input image data RGB Data from the image analyzer 610, and may generate a scaling factor with respect to the image data in accordance with its histogram, e.g., luminance components of the input image data RGB Data, and with respect to conversion parameters in a parameter table 622 of the scaling factor calculator 620. The parameter table 622, e.g., Table 1 below, may include a plurality of conversion parameters, i.e., local, zonal, temporal, and/or gamma parameters, determined according to experimentation and corresponding to the histogram data received from the image analyzer 610. The conversion parameters in the parameter table 622 may be adjusted with respect to a type of display device. Determination of the scaling factor with respect to the histogram data received from the image analyzer 610 and with respect to the parameter table 622 will be discussed in more detail below with reference to FIGS. 11A to 11D.

Table 1

| Parameter | General image | Very dark image | Very bright image |
|---|---|---|---|
| Local_Para | 1.3 | 1.3 | 1.3 |
| Zonal_Para | 0.6 | 0.4 | 0.6 |
| Temporal_Para | 1.1 | 1.1 | 1.1 |
| Gamma_Para | 1.3 | 1.1 | 1.1 |

The intensity rescaling unit 630 of the third controller 600 may receive the histogram data from the image analyzer 610, and may rescale intensity of the input image data accordingly. For example, the intensity rescaling unit 630 may receive the graphic image from the image analyzer 610, as illustrated in FIG. 10, and may reduce an overall luminance, i.e., reduce intensity of each pixel, thereof with respect to the luminance distribution pattern in the histogram.

The selector 640 may control transmittance of an output value of the intensity rescaling unit 630, i.e., an input image data with rescaled intensity. For example, the selector 640 may control output of the intensity rescaling unit 630, e.g., operate a relay between the intensity rescaling unit 630 and an output of the third controller 600, so the input image data with rescaled intensity may be blocked or transmitted as an output of the third controller 600. The selector 640 may be controlled by the image analyzer 610 with respect to a type of the input image data.

Referring to FIG. 10, the image analyzer 610 may analyze the input image data RGB Data according to luminance features thereof. For example, as illustrated in FIG. 10, the image analyzer 610 may generate a histogram representing whether the input image data is a very dark image, a very bright image, a general image, and/or a graphic image. As further illustrated in FIG. 10, a histogram of a graphic image, e.g., data such as games, maps, and/or texts, may include a relatively large number of bins, i.e., columns representing intensities of pixels, so the graphic image may be transferred to the intensity rescaling unit 630 to reduce an overall intensity level thereof via adjustment of pixel intensity. The remaining image types, i.e., the very dark image, the very bright image, and the general image, may be transferred to the scaling factor calculator 620 to determine conversion parameters from the parameter table 622 and respective attenuation factors. The graphic image maybe scaled via the intensity rescaling unit 630, instead of the scaling factor calculator 620, because extraction of luminance features from a graphic images for calculating a corresponding scaling factor may be complex, and may result in an inadequate minimized image data.

Conversion parameters and respective attenuation factors may be determined according to luminance features in the histogram data, as will be explained in more detail below with reference to FIGS. 11A-11D. Image data received from the image analyzer 610 may be analyzed to extract luminance features, such as data regarding gradient magnitude of a pixel corresponding to input image data, i.e., a rapid change in brightness, spatial location of the pixel, speed between frames of the pixel, and luminance level of the pixel. Each extracted luminance feature may be used in conjunction with a corresponding conversion parameter to generate a respective attenuation factor. The respective attenuation factors may be used to generate the scaling factor.

FIG. 11A to FIG. 11D illustrate relationships between respective features and a scale ratio with respect to respective scale factors shown in FIG. 9.

First, a gradient magnitude of a pixel corresponding to input image data, i.e., a dramatic delta in brightness or contours in the image, may be obtained by extracting high frequency components of the image data.

$$I_{(x,y)} - LPF_{(x,y)} \qquad (2)$$

where, $I_{(x,y)}$ is an intensity of a pixel corresponding to the input image data, and $LPF_{(x,y)}$ is an intensity of a pixel after low-pass filtering. The result of equation (2) provides a high frequency component of the pixel, which may be scaled by a scaling ratio between one and zero.

As shown in FIG. 11A, when a gradient magnitude increases, i.e., more high frequency components are in the image data of the pixel, the scaling ratio may decrease. Thus, a signal level in a region having many edges, i.e., high frequency components, may be reduced relative to a signal level in a region having fewer edges. In other words, a high local attenuation factor corresponds to low gradient magnitude, i.e., a high frequency component having a low value. Accordingly, when the input image data has an increased high frequency component, i.e., high gradient magnitude, the scaling ratio may be decreased.

The high frequency component may be normalized via use of a local_para parameter from the parameter table 622, e.g., 1.3 from Table 1, to generate a local attenuation factor having a value on a scale between zero and one. An intensity of the input image data may be adjusted for each pixel by multiplying the intensity of the input data image by the local attenuation factor, as illustrated in Equation 3 below, where $I'_{(x,y)}$ refers to the adjusted intensity value, and local _para refers to a parameter from the parameter table 622 having a predetermined constant value.

$$I'_{(x,y)} = \frac{(I_{(x,y)} - LPF_{(x,y)})^{local\_para}}{I_{(x,y)} - LPF_{(x,y)}} \bullet I_{(x,y)} \tag{3}$$

Data regarding a spatial location of each pixel, i.e., a spatial attenuation parameter, may be obtained by extracting x and y coordinates for each pixel in the input image data by the image analyzer 610. For example, an upper left-hand corner of the display panel 100 may have a coordinate value of [x, y] = [0, 0], and a lower right-hand corner of the display panel 100 may have a coordinate value of [x, y] = [$x_1$, $y_1$], where $x_1$ may indicate a width of an image, and $y_1$ may indicate a height of an image. The coordinates of each pixel may be used with a zonal_para parameter from the parameter table 622, e.g., 0.6 from Table 1 for a general image or a very bright image, or 0.4 from Table 1 for a very dark image, to generate a zonal attenuation factor having a value on a scale between zero and one. An intensity of the input image data may be adjusted for each pixel by multiplying the intensity of the input data image by the zonal attenuation factor, as illustrated in Equation 4 below, where $x_1$ and $y_1$ refer to width and height of an image, respectively, and zonal_ para refers to a parameter from the parameter table 422 having a predetermined constant value. The zonal attenuation factor may be obtained by an approximated Gaussian function.

$$I'_{(x,y)} = [1 - \{Zonal\_Para \cdot \frac{(x - \frac{1}{2} \cdot Width)^2 + (y - \frac{1}{2} \cdot Height)^2}{Width \cdot Height}\}] \cdot I_{(x,y)}$$

(4)

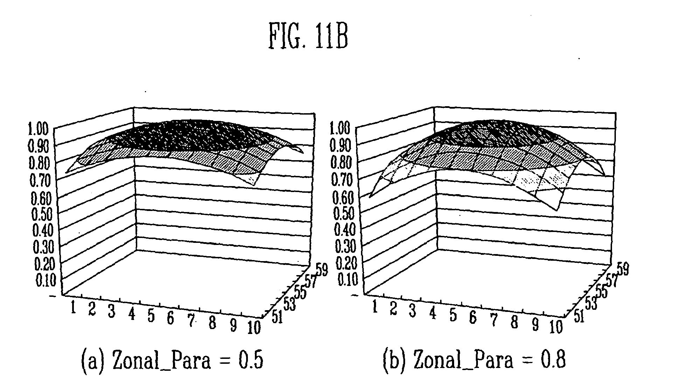

The zonal attenuation factors of peripheral pixels in the pixel unit 100 may be lower as compared to zonal attenuation factors of central pixels of the pixel unit 100, so intensity in the peripheral pixels may be reduced more than intensity in the central pixels. For example, as illustrated in FIG. 11B, a mapped input image data according to x and y coordinates may have adjusted intensity levels along the z-axis, i.e., zonal attenuation factor. As illustrated in graphs (a) and (b) of FIG. 11B, a center of an image may have an adjusted intensity value substantially equal to the input intensity value, i.e., the zonal attenuation factor may be substantially 1. However, as further illustrated in graphs (a) and (b) of FIG. 11B, peripheral portions of the image may have zonal attenuation factors of about 0.5 or about 0.8, respectively, with an increasing zonal_para further reducing intensities.

Data regarding speed between frames of a pixel corresponding to the input image data, i.e., a temporal attenuation parameter, may be obtained by comparing pixel intensities of two continuous frames, where a frame having a greater pixel intensity may be regarded as a faster frame (a frame having greater movement). For example, Diff, a difference between pixel intensities of frames, may be calculated according to Equation 5 below, where $I^n$ indicates a current frame and $I^{n-1}$ indicates a previous frame. A pixel in a subwindow of $5 \times 5$ may be used as an example.

$$Diff = \frac{\sum_i^{5x5} I_i^{n-1}}{\sum_i^{5x5} I_i^n} - 1$$

(5)

Accordingly, when there are large changes of intensity on a pixel between frames, the temporal attenuation factor increases a reduction degree of a signal level.

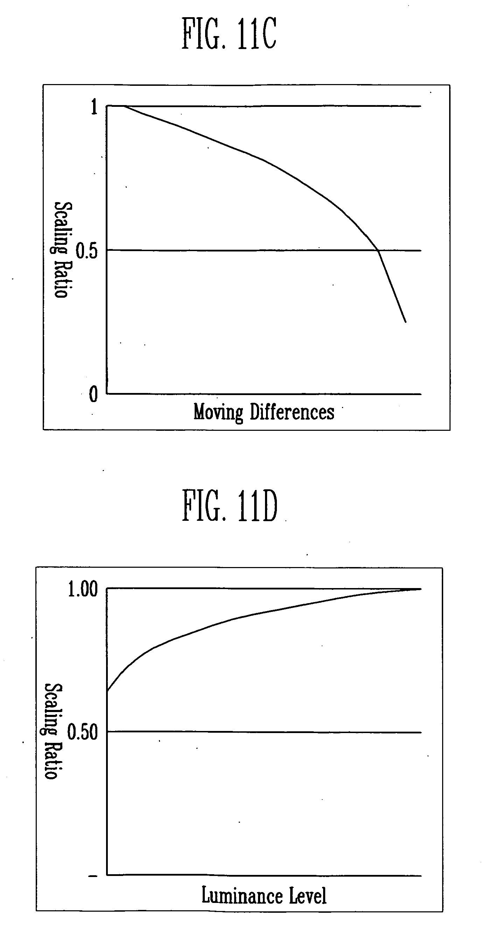

FIG. 11C shows a correlation curve between the moving difference and the scaling ratio. A reduction degree of a signal level is increased at a boundary part of a rapidly moving image on a real moving image.

The difference between pixel intensities of frames, i.e. Diff, may be normalized to provide a temporal attenuation factor having a value between zero and one. For example, when an extracted value Diff is less than zero, the intensity of the pixel may be multiplied by (-1), and when an extracted value Diff is greater than 1, the intensity of the pixel may be cut-off at 1 to provide a value between zero and one. In other words, Diff may be normalized via use of a temporal_ para parameter from the parameter table 422, e.g., 1.1 from Table 1, to generate a temporal attenuation factor having a value on a scale between 0 and 1. The intensity of the input data image may be adjusted for each pixel by multiplying the intensity of the input data image by the temporal attenuation factor, as illustrated in Equation 6 below, where temporal_ para refers to a parameter from the parameter table 422 having a predetermined constant value.

$$I'_{(x,y)} = \frac{Diff^{temporal\_Para}}{Diff} \cdot I_{(x,y)}$$

$$(6)$$

When the difference between the pixel frames is large, the temporal attenuation factor may be low to increase a degree of reduction of the input image data, as illustrated in FIG. 11C. For example, a scaling of the input image data may be decreased at a boundary between a rapidly moving image and a slow moving image.

Data regarding luminance of a pixel corresponding to the input image data, i.e., a gamma attenuation parameter, may be obtained by determining light emission intensity of the input image data. When the intensity level of the pixel is low, a luminance factor may increase a reduction degree of a signal level. For example, as illustrated in FIG. 11D, a pixel of a bright region may have a compressed intensity (intensity which data is compressed) that is lower than that of a pixel of a dark region. The luminance factor and a corresponding adjusted intensity may be obtained according to Equations 7-8 below, respectively.

Here, I'$_{(x,y)}$ is a rescaled value. Also, Gamma_Para is a constant number for determining the intensity of scaling as a parameter value from the Table 1, and uses a predetermined value.

$$LumiFactor = \frac{I^{temporal\_Para}_{(x,y)}}{I_{(x,y)}}$$

$$(7)$$

$$I'_{(x,y)} = I^{temporal\_Para}_{(x,y)}$$

$$(8)$$

When respective features are extracted from the input image data and different scaling factors are obtained using the extracted feature, a final scaling factor applied to a final output image may be calculated as the product of respective scaling factors, namely, a local attenuation factor, a zonal attenuation factor, a temporal attenuation factor, and a luminance factor.

The final scaling factor may be applied to the input image data RGB Data to generate and display an image using low power consumption while minimizing image quality degradation. More specifically, the input image data RGB Data may be scaled down, so image quality may be minimally degraded even while reducing power consumption. Accordingly, display quality and power reduction may be maximized.

The second controller 500 and the third controller 600 may operate at different times. Accordingly, only one of the changed data R'G'B' Data output by the second controller 500 or the scaled data R"G"B" Data output by the third controller 600 may be provided to the data driver 300. For example, the third controller 600 may operate in accordance with a user input request to preserve power and/or after a period of inactivity, with the second controller 500 operating otherwise.

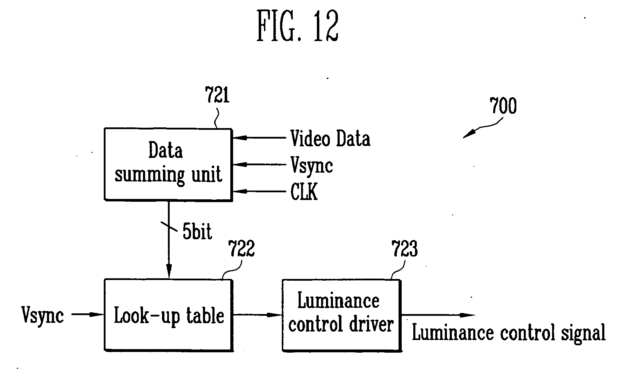

FIG. 12 illustrates a block diagram showing the fourth controller 700 shown in FIG. 1 according to an embodiment. The fourth controller 700 functions to control a brightness of the pixel unit 100 according to an emission rate thereof. The fourth controller 700 may include a data summing unit 721, a look-up table 722, and a luminance control driver 723.

The data summing unit 721 may generate a magnitude of a frame data, i.e.; a sum of video data input to pixels 110 emitting light during one frame. The sum of video data input to pixels 110 emitting light during one frame is referred to as 'frame data'. When the magnitude of the frame data is great, the emission rate of the pixel unit 100 is high or there are many pixels 110 expressing images of a high gradation.

When the frame data is great, a lot of current is flowing through the pixel unit 100. Accordingly, when the magnitude of the frame data is equal to or greater than a predetermined value, the luminance of the pixel unit 100 may be controlled to reduce the entire brightness of the pixel unit 100. When the brightness of the pixel unit 100 is reduced, a pixel 110 emitting light has a high luminance to maintain a high luminance difference with a pixel not emitting light, i.e., a high contrast ratio.

On the other hand, when the brightness of the pixel unit 100 is not reduced, an emission time of pixels 110 emitting light may have to be lengthened to increase the luminance. This may limit a contrast ratio between pixels 110 emitting light and pixels 110 not emitting light. That is, in accordance with embodiments, the contrast ratio between pixels 110 emitting light and pixels 110 not emitting light may be increased so that the images may be clearly viewed.

The look-up table 722 may store information about a ratio of an emission period and a non-emission period of an emission control signal corresponding to an upper 5 bit value of the frame data. The brightness of the pixel unit 100 emitting light during one frame may be determined using the information stored in the look-up table 722.

When the magnitude of the frame data is equal to or greater than a predetermined value, the luminance control driver 723 may output a luminance control signal, and adjust the ratio of an emission period and a non-emission period of the emission control signal input to the pixel unit 100.

When a luminance control ratio is continuously increased proportional to an increase in the luminance of the pixel unit 100 and the luminance of the pixel unit 100 is very high, a sufficiently bright screen may not be provided due to an excessive luminance control. This may lead to the deterioration of an entire brightness. Accordingly, a maximal control range of the luminance may be set to suitably adjust the entire brightness of the pixel unit 100.

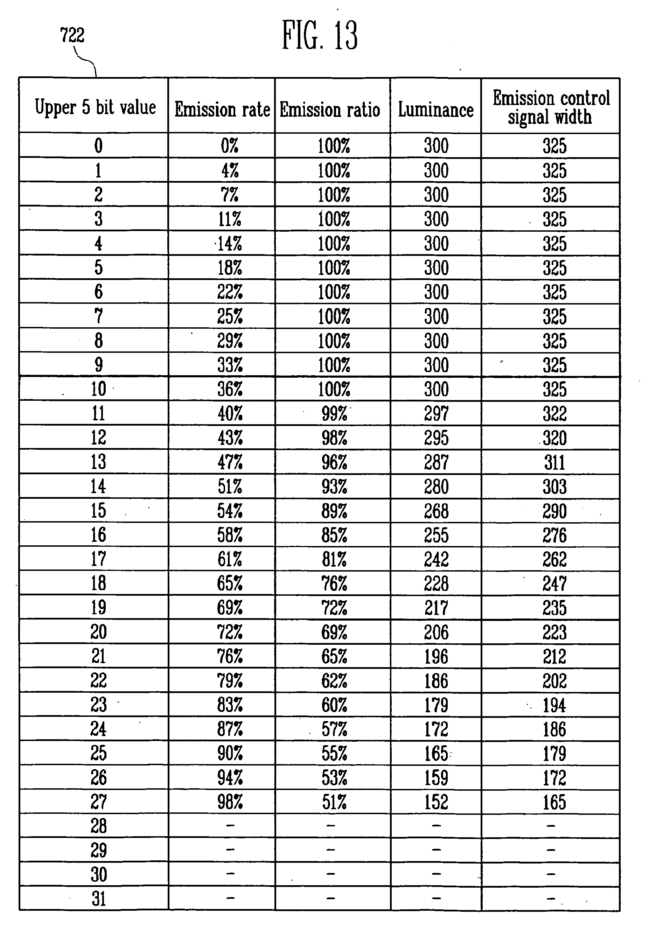

FIG. 13 is a table showing an example of the look-up table 722 shown in FIG. 12. FIG. 13 shows the look-up table 722 in which an emission ratio is limited to 50 % of a maximum value according to the luminance of the pixel unit 100.

With reference to FIG. 13, when a rate of an emission region of the pixel unit 100 is less than 36 % of a total pixel unit 100, the luminance of the pixel unit 100 is not limited. When a rate of an emission region of the pixel unit 100 is equal to or greater than 36 % of a total pixel unit 100, the luminance of the pixel unit 100 is limited. When an area in which the pixel unit 100 emits light with the maximum luminance is increased, a limit ratio of the luminance is also increased. A ratio of an emission area is a variable determined by a following equation 9.

$$Emission\ ratio = \frac{lum.\ of\ a\ pixel\ portion\ emitting\ light\ during\ one\ frame}{lum.\ of\ a\ pixel\ portion\ emitting\ light\ with\ entire\ white}$$

$$(9)$$

Further, so as to prevent excessively limiting of the luminance, a maximum limit ratio may be limited, e.g., to 50 %. Accordingly, when most of the pixels 110 emit light with a maximum luminance, the luminance limit ratio remains at about 50 %.

As is seen from the forgoing description, according to embodiments, a display may have its luminance adjusted according to ambient light and/or according to an emission amount of a pixel unit, so as to improve the visibility and/or to reduce power consumption. The power consumption reduction may be realized without significantly influencing the image quality through scaling of the input image data. Accordingly, image quality and power reduction may be maximized.

Furthermore, input image data may be changed in accordance with an ambient environment, such as the intensity of ambient light, in order to enhance the visibility. In particular, when a display is exposed to ambient light greater than a predetermined illumination, changed image data may be generated and a corresponding image may be displayed, so that the visibility may be improved, e.g., even under direct sunlight. The changed data may be obtained by increasing saturation of the input image data.

In addition, when changed data is generated, one of at least two modes to change input image data may be used. The at least two modes may be defined in accordance with the intensity of ambient light, and may alter the saturation of the input image data accordingly.

Exemplary embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

**Claims**

1. An organic light emitting display for displaying an image based on input image data (RGBData) , comprising:

   a pixel unit (100) including a plurality of scan lines (S1, S2, Sn) configured to provide scan signals, a plurality of emission control lines (EM1, EM2, EMn) configured to provide emission control signals, a plurality of data lines (D1, D2, Dm) configured to provide data signals, and a plurality of pixels (110) coupled to the plurality of scan lines (S1, S2, Sn), the plurality of mission control lines (EM1, EM2, EMn), and the plurality of data lines (D1, D2, Dm);

   a scan driver (200) configured to sequentially generate and apply the scan signals and the emission control signals to the plurality of scan lines (S1, S2, Sn) and to the plurality of emission control lines (EM1, EM2, EMn), respectively;

   a data driver (300) configured to generate and apply the data signals to the plurality of data lines (D1, D2, Dm);

   an optical sensor (800) configured to generate an optical sensing signal (Ssens) corresponding to an intensity of ambient light;

   a first controller (400) configured to select a gamma value corresponding to the optical sensing signal (Ssens), to output a gamma compensation control signal which is adapted to control gradation voltages of the data signals according to the selected gamma value, and to thereby control gradation voltages of the data signals; and

   a fourth controller (700) configured to provide a luminance control signal adapted for controlling a pulse width of the emission control signals to the scan driver (200);

   **characterised by**

   a second controller (500) configured to compare the optical sensing signal (Ssens) with a previously set reference value, to generate a selection signal (Ssel) in response thereto, and to provide input image data (RGB Data) or changed image data (R'G'B' Data) to the data driver (300) in accordance with the selection signal (Ssel); and

   a third controller (600) configured to extract image characteristics from the input image data (RGB Data), to determine a scaling factor corresponding to the extracted image characteristics, to scale the input image data (RGB Data) by the scaling factor, and to provide the scaled image data to the data driver (300),

   wherein only one of the second and the third controller (500, 600) are adapted to operate at one time.

2. The organic light emitting display as claimed in claim 1,
   wherein according to an intensity of the ambient light sensed by the optical sensor (800), the first controller (400) is adapted to operate when the ambient light has an intensity less than the reference value, and the second controller (500) is adapted to operate when the ambient light has an intensity equal to or greater than the reference value.

3. The organic light emitting display as claimed in one of the preceding claims, wherein the data driver (300) is adapted to receive the image data converted by one of the second controller (500) and the third controller (500), to generate data signals corresponding to the image data, and to transfer the generated data signals to the data lines (D1, D2, Dm).

4. The organic light emitting display as claimed in one of the preceding claims, wherein the first controller (400) comprises:

   an analog-digital converter (412) configured to convert an analog sensing signal (Ssens) output from the optical sensor (800) into a digital sensing signal;

   a counter (413) configured to generate a counting signal (Cs) during one frame period;

   a conversion processor (414) configured to output a control signal in accordance with the digital sensing signal and the counting signal (Cs);

   a register value generator (415) configured to classify a brightness of ambient light into a plurality of stages and to store a plurality of register set values corresponding to the respective stages;

   a first selector (416) configured to select and output one of the plurality of set values stored in the register value generator in accordance with the control signal output by the conversion processor (414); and

   a gamma compensation circuit (418) configured to generate a plurality of gradation voltages according to the one of the plurality of set values output from the first selector (416).

5. The organic light emitting display as claimed in claim 4, wherein the first controller (400) further comprises a second selector (417) configured to control an operational state of the first controller (400).

6. The organic light emitting display as claimed in one of the preceding claims, wherein the second controller (500) comprises:

a comparator (510) configured to compare the optical sensing signal (Ssens) with a previously set reference value and output a selection signal (Ssel) for selecting one of at least three modes;
a controller (520) configured to determine, in accordance with the selection signal (Ssel), whether the input image data (RGB Data) is to be changed;
a first calculator (530) configured to generate pixel saturation data (Sout) corresponding to the input image data (RGB Data) received from the controller (520);
a second calculator (540) configured to generate changed data (R'G'B' Data) in accordance with the pixel saturation data (Sout) and the selection signal (Ssel); and
a memory (550) configured to store the input image data (RGB Data) received from the controller (520) or the changed data (R'G'B' Data) supplied from the second calculator (540).

7. The organic light emitting display as claimed in claim 6, wherein the first calculator (530) is configured to generate the pixel saturation data (Sout) using a saturation change matrix (A).

8. The organic light emitting display as claimed in claim 7, wherein the first calculator (530) is adapted to calculate pixel saturation data (Sout) based on sub pixel data included in the input image data (RGB Data).

9. The organic light emitting display as claimed in one of claims 6 to 8, further comprising a reference look-up table unit (545) including first and second saturation and luminance look-up tables, wherein the saturation look-up tables and the luminance look-up tables are tables having a saturation change value and a luminance change value for each pixel saturation value, and wherein the second calculator (540) is adapted to select one of a first saturation and luminance look-up table (LUT) and a second saturation and luminance look-up table (LUT) in the reference look-up table unit (545) in accordance with the selection signal (Ssel).

10. The organic light emitting display as claimed in claim 9, wherein the second calculator (540) is configured to select one of the saturation and luminance look-up tables in accordance with the pixel saturation data (Sout) and the selection signal (Ssel), and extract the changed data (R'G'B' Data) from the selected look-up tables.

11. The organic light emitting display as claimed in one of the preceding claims, wherein the third controller (600) comprises:

an image analyzer (610) adapted to analyze input image data (RGB Data), wherein the image analyzer (610) is adapted to receive the input image data (RGB Data), and to extract luminance components thereof to thereby generate histograms,
a scaling factor calculator (620) adapted to generate a scaling factor with respect to the analyzed input image data (RGB Data) in accordance with the generated histograms, and to apply the scaling factor to the input image data (RGB Data) to generate a scaled-down image data (R"G"B" Data) and
an intensity rescaling unit (630) adapted to reduce an overall intensity level of the input image data (RGB Data).

12. The organic light emitting display as claimed in claim 11, wherein the scaling factor calculator (620) includes a parameter table (622), which stores conversion parameter values corresponding to the histogram data received from the image analyzer (610).

13. The organic light emitting display as claimed in one of claims 11 and 12, wherein the third controller (600) further comprises a selector (640) configured to selectively transmit an output of the intensity rescaling unit (630).

14. The organic light emitting display as claimed in one of the preceding claims 11-13, wherein the image analyzer (610) is configured to transmit the histogram to the intensity scaling unit (630) and to the scaling factor calculator (620).

15. The organic light emitting display as claimed in claim 14, wherein the intensity rescaling unit (630) is configured to rescale a total intensity of images based on a distribution pattern of the histogram, and the scaling factor calculator (620) is configured to use the histogram information as a source of a parameter selection influencing the scaling factor.

16. The organic light emitting display as claimed in one of the preceding claims, wherein the fourth controller (700) comprises:

a data summing unit (721) configured to sum input image data (RGB Data) during one frame period to determine a frame data magnitude value;

a look-up table (722) configured to store a ratio of an emission period and a non-emission period of an emission control signal corresponding to an upper 5 bit value of the frame data magnitude value; and

a luminance control driver (723) configured to output the luminance control signal in accordance with the information stored in the look-up table (722) to adjust a ratio of an emission period and a non-emission period of the emission control signal.

**17.** A method of controlling an organic light emitting display driven by a plurality of scan signals, a plurality of data signals and a plurality of emission control signals to display an image based on input image data (RGB Data), the method comprising:

generating an optical sensing signal (Ssens) corresponding to an intensity of ambient light;

selecting a gamma value corresponding to the optical sensing signal (Ssens), outputting a gamma compensation control signal which is adapted to control gradation voltages of the data signals according to the selected gamma value, and thereby controlling gradation voltages of the data signals; and

controlling a pulse width of the emission control signals;

the method **characterised by**

selectively performing either the steps of

comparing the optical sensing signal (Ssens) with a previously set reference value, generating a selection signal (Ssel) in response thereto, and providing input image data (RGB Data) or changed image data (R'G'B' Data) as the data signal in accordance with the selection signal (Ssel);

or performing the steps of

extracting image characteristics from the provided input image data (RGB Data) by receiving the input image data (RGB Data) and extracting luminance components thereof to thereby generate histograms, to determine a scaling factor in accordance with the generated histograms, scaling the input image data (RGB Data) by the scaling factor, and outputting scaled image data (R"G"B" Data) as the data signal.

## Patentansprüche

**1.** Organische lichtemittierende Anzeige zum Anzeigen eines Bildes auf der Basis von Eingangsbilddaten (RGB-Daten), aufweisend:

eine Pixeleinheit (100), die eine Vielzahl von Ansteuerleitungen (S1, S2, Sn), die zur Bereitstellung von Ansteuersignalen konfiguriert sind, eine Vielzahl von Emissionskontrollleitungen (EM1, EM2, EMn), die zur Bereitstellung von Emissionskontrollsignalen konfiguriert sind, eine Vielzahl von Datenleitungen (D2, D2, Dm), die zur Bereitstellung von Datensignalen konfiguriert sind, und eine Vielzahl von Pixeln (110), die an die Vielzahl von Ansteuerleitungen (S1, S2, Sn), die Vielzahl von Emissionskontrollleitungen (EM1, EM2, EMn) und die Vielzahl von Datenleitungen (D1, D2, Dm) gekoppelt sind, aufweist;

einen Ansteuerungstreiber (200) der konfiguriert ist, die Ansteuersignale und die Emissionskontrollsignale jeweils sequentiell zu erzeugen und jeweils an die Vielzahl von Ansteuerleitungen (S1, S2, Sn) und die Vielzahl von Emissionskontrollleitungen (EM1, EM2, EMn) anzulegen;

einen Datentreiber (300), der konfiguriert ist, die Datensignale zu erzeugen und an die Vielzahl von Datenleitungen (D1, D2, Dm) anzulegen;

einen optischen Sensor (800) der konfiguriert ist, ein optisches Abtastsignal (Ssens) entsprechend einer Intensität von Umgebungslicht zu erzeugen;

eine erste Steuervorrichtung (400), die konfiguriert ist, einen Gamma-Wert entsprechend dem optischen Abtastsignal (Ssens) zu selektieren, ein Gamma-Kompensationssteuersignal auszugeben, das ausgebildet ist, Gradationsspannungen der Datensignale gemäß dem selektierten Gamma-Wert zu steuern, und **dadurch** Gradationsspannungen der Datensignale zu steuern; und

eine vierte Steuervorrichtung (700), die konfiguriert ist, den Ansteuerungstreiber (200) mit einem Leuchtdichte-Steuersignal, das zur Steuerung einer Pulsbreite der Emissionskontrollsignale ausgebildet ist, zu versorgen;

**gekennzeichnet durch**

eine zweite Steuervorrichtung (500), die konfiguriert ist, das optische Abtastsignal (Ssens) mit einem vorher festgelegten Referenzwert zu vergleichen, in Reaktion darauf ein Selektierungssignal (Ssel) zu erzeugen und den Datentreiber (300) gemäß dem Selektierungssignal (Ssel) mit Eingangsbilddaten (RGB-Daten) oder geänderten Bilddaten (R'G'B'-Daten) zu versorgen; und

eine dritte Steuervorrichtung (600), die konfiguriert ist, Bildeigenschaften von den Eingangsbilddaten (RGB-Daten) zu extrahieren, einen Skalierungsfaktor entsprechend den extrahierten Bildeigenschaften zu bestimmen, die Eingangsbilddaten (RGB-Daten) **durch** den Skalierungsfaktor zu skalieren und den Datentreiber (300) mit den skalierten Bilddaten zu versorgen,

wobei nur eine der zweiten und der dritten Steuervorrichtung (500, 600) ausgebildet ist, zur gleichen Zeit in Betrieb zu sein.

2. Organische lichtemittierende Anzeige nach Anspruch 1, wobei abhängig von einer vom optischen Sensor (800) erfassten Intensität des Umgebungslichts die erste Steuervorrichtung (400) ausgebildet ist, in Betrieb zu sein, wenn das Umgebungslicht eine Intensität aufweist, die unter dem Referenzwert liegt, und die zweite Steuervorrichtung (500) ausgebildet ist, in Betrieb zu sein, wenn das Umgebungslicht eine Intensität aufweist, die gleich dem oder größer als der Referenzwert ist.

3. Organische lichtemittierende Anzeige nach einem der vorhergehenden Ansprüche, wobei der Datentreiber (300) ausgebildet ist, die entweder von der zweiten Steuervorrichtung (500) oder von der dritten Steuervorrichtung (500) konvertierten Bilddaten zu erhalten, Datensignale entsprechend den Bilddaten zu erzeugen und die erzeugten Datensignale zu den Datenleitungen (D1, D2, Dm) zu übertragen.

4. Organische lichtemittierende Anzeige nach einem der vorhergehenden Ansprüche, wobei die erste Steuervorrichtung (400) aufweist:

einen Analog-Digital-Wandler (412), der konfiguriert ist, ein vom optischen Sensor (800) ausgegebenes analoges Abtastsignal (Ssens) in ein digitales Abtastsignal zu konvertieren;
eine Zählvorrichtung (413), die konfiguriert ist, während einer Frame-Periode ein Zählsignal (Cs) zu erzeugen;
einen Konvertierungsprozessor (414), der konfiguriert ist, gemäß dem digitalen Abtastsignal und dem Zählsignal (Cs) ein Steuersignal auszugeben;
einen Registerwertgenerator (415), der konfiguriert ist, eine Helligkeit von Umgebungslicht in eine Vielzahl von Stufen einzuteilen und eine Vielzahl von Registersollwerten entsprechend den jeweiligen Stufen zu speichern;
eine erste Selektiervorrichtung (416), die konfiguriert ist, einen aus der Vielzahl von im Registerwertgenerator gespeicherten Sollwerten gemäß dem vom Konvertierungsprozessor (414) ausgegebenen Steuersignal zu selektieren und auszugeben; und
eine Gamma-Kompensationsschaltung (418), die konfiguriert ist, eine Vielzahl von Gradationsspannungen gemäß dem einen aus der Vielzahl von Sollwerten, der von der ersten Selektiervorrichtung (416) ausgegeben wird, zu erzeugen.

5. Organische lichtemittierende Anzeige nach Anspruch 4, wobei die erste Steuervorrichtung (400) weiterhin eine zweite Selektiervorrichtung (417) aufweist, die konfiguriert ist, einen Betriebszustand der ersten Steuervorrichtung (400) zu steuern.

6. Organische lichtemittierende Anzeige nach einem der vorhergehenden Ansprüche, wobei die zweite Steuervorrichtung (500) aufweist:

einen Komparator (510), der konfiguriert ist, das optische Abtastsignal (Ssens) mit einem vorher festgelegten Referenzwert zu vergleichen und ein Selektierungssignal (Ssel) zum Selektieren eines von zumindest drei Modi auszugeben;
eine Steuervorrichtung (520), die konfiguriert ist, gemäß dem Selektierungssignal (Ssel) zu bestimmen, ob die Eingangsbilddaten (RGB-Daten) geändert werden müssen;
eine erste Rechenvorrichtung (530), die konfiguriert ist, Pixelsättigungsdaten (Sout) entsprechend den von der Steuervorrichtung (520) erhaltenen Eingangsbilddaten (RGB-Daten) zu erzeugen;
eine zweite Rechenvorrichtung (540), die konfiguriert ist, geänderte Daten (R'G'B'-Daten) gemäß den Pixelsättigungsdaten (Sout) und dem Selektierungssignal (Ssel) zu erzeugen; und
eine Speichervorrichtung (550), die konfiguriert ist, die von der Steuervorrichtung (520) erhaltenen Eingangsbilddaten (RGB-Daten) oder die von der zweiten Rechenvorrichtung (540) gelieferten geänderten Daten (R'G'B'-Daten) zu speichern.

7. Organische lichtemittierende Anzeige nach Anspruch 6, wobei die erste Rechenvorrichtung (530) konfiguriert ist, die Pixelsättigungsdaten (Sout) mittels einer Sättigungsänderungsmatrix (A) zu erzeugen.

8. Organische lichtemittierende Anzeige nach Anspruch 7, wobei die erste Rechenvorrichtung (530) konfiguriert ist, Pixelsättigungsdaten (Sout) auf der Basis von in den Eingangsbilddaten (RGB-Daten) enthaltenen Subpixeldaten zu berechnen.

9. Organische lichtemittierende Anzeige nach einem der Ansprüche 6 bis 8, weiterhin aufweisend eine Referenznachschlagetabelleneinheit (545), die eine erste und eine zweite Sättigungs- und Leuchtdichte-Nachschlagetabelle aufweist, wobei die Sättigungsnachschlagetabellen und die Leuchtdichte-Nachschlagetabellen Tabellen sind, die einen Sättigungsänderungswert und einen Leuchtdichte-Änderungswert für jeden Pixelsättigungswert aufweisen, und wobei die zweite Rechenvorrichtung (540) ausgebildet ist, gemäß dem Selektierungssignal (Ssel) entweder eine erste Sättigungs- und Leuchtdichte-Nachschlagetabelle (LUT) oder eine zweite Sättigungs- und Leuchtdichte-Nachschlagetabelle (LUT) in der Referenznachschlagetabelleneinheit (545) zu selektieren.

10. Organische lichtemittierende Anzeige nach Anspruch 9, wobei die zweite Rechenvorrichtung (540) konfiguriert ist, gemäß den Pixelsättigungsdaten (Sout) und dem Selektierungssignal (Ssel) eine der Sättigungs- und Leuchtdichte-Nachschlagetabellen zu selektieren, und die geänderten Daten (R'G'B'-Daten) von den selektierten Nachschlagetabellen zu extrahieren.

11. Organische lichtemittierende Anzeige nach einem der vorhergehenden Ansprüche, wobei die dritte Steuervorrichtung (600) aufweist:

eine Bildanalysevorrichtung (610), die ausgebildet ist, Eingangsbilddaten (RGB-Daten) zu analysieren, wobei die Bildanalysevorrichtung (610) ausgebildet ist, die Eingangsbilddaten (RGB-Daten) zu erhalten und Leuchtdichte-Komponenten derselben zu extrahieren, um **dadurch** Histogramme zu erzeugen,
eine Skalierungsfaktor-Rechenvorrichtung (620), die ausgebildet ist, einen Skalierungsfaktor mit Bezug auf die analysierten Eingangsbilddaten (RGB-Daten) gemäß den erzeugten Histogrammen zu erzeugen, und den Skalierungsfaktor an die Eingangsbilddaten (RGB-Daten) anzulegen, so dass herunterskalierte Bilddaten (R"B"G"-Daten) erzeugt werden, und
eine Einheit (630) zum Neuskalieren der Intensität, die ausgebildet ist, einen Gesamtintensitätspegel der Eingangsbilddaten (RGB-Daten) zu reduzieren.

12. Organische lichtemittierende Anzeige nach Anspruch 11, wobei die Skalierungsfaktor-Rechenvorrichtung (620) eine Parametertabelle (622) aufweist, die Konvertierungsparameter entsprechend den von der Bildanalysevorrichtung (610) erhaltenen Histogrammdaten speichert.

13. Organische lichtemittierende Anzeige nach einem der Ansprüche 11 und 12, wobei die dritte Steuervorrichtung (600) weiterhin eine Selektiervorrichtung (640) aufweist, die konfiguriert ist, wahlweise eine Ausgabe der Einheit (630) zum Neuskalieren der Intensität zu übertragen.

14. Organische lichtemittierende Anzeige nach einem der vorhergehenden Ansprüche 11-13, wobei die Bildanalysevorrichtung (610) konfiguriert ist, das Histogramm zur Einheit (630) zum Neuskalieren der Intensität und zur Skalierungsfaktor-Rechenvorrichtung (620) zu übertragen.

15. Organische lichtemittierende Anzeige nach Anspruch 14, wobei die Einheit (630) zum Neuskalieren der Intensität konfiguriert ist, eine Gesamtintensität von Bildern auf der Basis eines Verteilungsmusters des Histogramms neu zu skalieren, und wobei die Skalierungsfaktor-Rechenvorrichtung (620) konfiguriert ist, die Histogramminformation als Quelle einer Parameterauswahl, die den Skalierungsfaktor beeinflusst, zu verwenden.

16. Organische lichtemittierende Anzeige nach einem der vorhergehenden Ansprüche, wobei die vierte Steuervorrichtung (700) aufweist:

eine Datensummiereinheit (721), die konfiguriert ist, Eingangsbilddaten (RGB-Daten) während einer Frame-Periode zu addieren, so dass ein Frame-Datenbetragswert bestimmt wird;
eine Nachschlagetabelle (722), die konfiguriert ist, ein Verhältnis einer Emissionsperiode und einer Nicht-Emissionsperiode eines Emissionskontrollsignals entsprechend einem oberen 5-Bit-Wert des Frame-Datenbetragswerts zu speichern; und
einen Leuchtdichte-Steuertreiber (723), der konfiguriert ist, das Leuchtdichte-Steuersignal gemäß der in der Nachschlagetabelle (722) gespeicherten Information auszugeben, so dass ein Verhältnis einer Emissionsperiode und einer Nicht-Emissionsperiode des Emissionskontrollsignals reguliert wird.

**17.** Verfahren zum Ansteuern einer organischen lichtemittierenden Anzeige, die durch eine Vielzahl von Ansteuersignalen, eine Vielzahl von Datensignalen und eine Vielzahl von Emissionskontrollsignalen zum Anzeigen eines Bildes auf der Basis von Eingangsbilddaten (RGB-Daten) gesteuert wird, wobei das Verfahren aufweist:

Erzeugen eines optischen Abtastsignals (Ssens) entsprechend einer Intensität von Umgebungslicht;
Selektieren eines Gamma-Werts entsprechend dem optischen Abtastsignal (Ssens), Ausgeben eines Gamma-Kompensationssteuersignals, das ausgebildet ist, Gradationsspannungen der Datensignale gemäß dem selektierten Gamma-Wert zu steuern, und **dadurch** Steuern von Gradationsspannungen der Datensignale; und
Steuern einer Pulsbreite der Emissionskontrollsignale;

wobei das Verfahren **gekennzeichnet ist durch**
die wahlweise Durchführung entweder der folgenden Schritte:

Vergleichen des optischen Abtastsignals (Ssens) mit einem vorher festgelegten Referenzwert, Erzeugen eines Selektierungssignals (Ssel) in Reaktion darauf, und Bereitstellen von Eingangsbilddaten (RGB-Daten) oder von geänderten Bilddaten (R'G'B'-Daten) als Datensignal gemäß dem Selektierungssignal (Ssel);

oder die Durchführung der folgenden Schritte:

Extrahieren von Bildeigenschaften von den bereitgestellten Eingangsbilddaten (RGB-Daten) **durch** den Erhalt der Eingangsbilddaten (RGB-Daten) und das Extrahieren von Leuchtdichte-Komponenten derselben, um **dadurch** Histogramme zu erzeugen, so dass ein Skalierungsfaktor gemäß den erzeugten Histogrammen bestimmt wird, Skalieren der Eingangsbilddaten (RGB-Daten) **durch** den Skalierungsfaktor, und Ausgeben der skalierten Bilddaten (R"G"B"-Daten) als Datensignal.

**Revendications**

**1.** Écran à diodes électroluminescentes organiques destiné à afficher une image, sur la base de données d'image d'entrée (données RVB), comprenant :

une unité de pixels (100), comprenant une pluralité de lignes de balayage (S1, S2, Sn) configurées pour fournir des signaux de balayage, une pluralité de lignes de commande de l'émission (EM1, EM2, EMn) configurées pour fournir des signaux de commande de l'émission, une pluralité de lignes de données (D1, D2, Dm) configurées pour fournir des signaux de données et une pluralité de pixels (110) couplés à la pluralité de lignes de balayage (S1, S2, Sn), à la pluralité de lignes de commande de l'émission (EM1, EM2, EMn) et à la pluralité de lignes de données (D1, D2, Dm) ;
un pilote de balayage (200), configuré pour produire et appliquer séquentiellement les signaux de balayage et les signaux de commande de l'émission à la pluralité de lignes de balayage (S1, S2, Sn) et à la pluralité de lignes de commande de l'émission (EM1, EM2, EMn), respectivement ;
un pilote de données (300), configuré pour produire et appliquer les signaux de données à la pluralité de lignes de données (D1, D2, Dm) ;
un capteur optique (800), configuré pour produire un signal de détection optique (Ssens) correspondant à une intensité de la lumière ambiante ;
un premier contrôleur (400), configuré pour sélectionner une valeur de gamma correspondant au signal de détection optique (Ssens), afin de produire un signal de commande de compensation du gamma qui est conçu pour commander les tensions de gradation des signaux de données en fonction de la valeur de gamma sélectionnée et de commander ainsi les tensions de gradation des signaux de données ; et
un quatrième contrôleur (700), configuré pour fournir au pilote de balayage (200) un signal de commande de la luminance conçu pour commander une largeur d'impulsion des signaux de commande de l'émission ;

**caractérisé par** :

un deuxième contrôleur (500), configuré pour comparer le signal de détection optique (Ssens) avec une valeur de référence renseignée précédemment, pour produire en réponse un signal de sélection (Ssel) et pour fournir au pilote de données (300) des données d'image d'entrée (données RVB) ou des données d'image modifiées (données R'V'B'), en fonction du signal de sélection (Ssel) ; et

un troisième contrôleur (600), configuré pour extraire des données d'image d'entrée (données RVB) des caractéristiques de l'image, pour déterminer un facteur de recadrage correspondant aux caractéristiques extraites de l'image, pour recadrer les données d'image d'entrée (données RVB) à l'aide d'un facteur de recadrage et pour fournir les données d'image recadrées au pilote de données (300) ;

dans lequel un seul contrôleur, sur les deuxième et troisième contrôleurs (500, 600), est conçu pour fonctionner à un instant donné.

2. Écran à diodes électroluminescentes organiques selon la revendication 1, dans lequel, en fonction de l'intensité de la lumière ambiante détectée par le capteur optique (800), le premier contrôleur (400) est conçu pour fonctionner lorsque la lumière ambiante a une intensité inférieure à la valeur de référence et le deuxième contrôleur (500) est conçu pour fonctionner lorsque la lumière ambiante a une intensité égale ou supérieure à la valeur de référence.

3. Écran à diodes électroluminescentes organiques selon l'une des revendications précédentes, dans lequel le pilote de données (300) est conçu pour recevoir les données d'image converties par le deuxième contrôleur (500) ou le troisième contrôleur (500), pour produire des signaux de données correspondant aux données d'image et pour transférer les signaux de données aux lignes de données (D1, D2, Dm).

4. Écran à diodes électroluminescentes organiques selon l'une des revendications précédentes, dans lequel le premier contrôleur (400) comprend :

un convertisseur analogique-numérique (412), configuré pour convertir un signal de détection analogique (Ssens) produit par le capteur optique (800) en un signal de détection numérique ;

un compteur (413), configuré pour produire un signal de comptage (Cs) pendant la période d'une image ;

un processeur de conversion (414), configuré pour produire un signal de commande en fonction du signal de détection numérique et du signal de comptage (Cs) ;

un générateur de valeurs de registre (415), configuré pour classer une luminosité de la lumière ambiante en une pluralité de degrés et pour stocker une pluralité de valeurs de réglage de registres correspondant aux différents degrés ;

un premier sélecteur (416), configuré pour sélectionner et produire en sortie une valeur choisie parmi la pluralité de valeurs de réglage stockées dans le générateur de valeurs de registre en fonction du signal de commande produit par le processeur de conversion (414) ; et

un circuit de compensation du gamma (418), configuré pour produire une pluralité de tensions de gradation en fonction de la valeur produite par le premier sélecteur à partir de la pluralité de valeurs de réglage.

5. Écran à diodes électroluminescentes organiques selon la revendication 4, dans lequel le premier contrôleur (400) comprend en outre un deuxième sélecteur (417), configuré pour commander un état de fonctionnement du premier contrôleur (400).

6. Écran à diodes électroluminescentes organiques selon l'une des revendications précédentes, dans lequel le deuxième contrôleur (500) comprend :

un comparateur (510), configuré pour comparer le signal de détection optique (Ssens) avec une valeur de référence renseignée précédemment et pour produire un signal de sélection (Ssel) destiné à sélectionner un mode sur au moins trois modes ;

un contrôleur (520), configuré pour déterminer, en fonction du signal de sélection (Ssel), si les données d'image d'entrée (données RVB) doivent être modifiées ;

un premier calculateur (530), configuré pour produire des données de saturation des pixels (Sout) correspondant aux données d'image d'entrée (données RVB) reçues du contrôleur (520) ;

un deuxième calculateur (540), configuré pour produire des données modifiées (données R'V'B') en fonction des données de saturation des pixels (Sout) et su signal de sélection (Ssel) ; et

une mémoire (550), configuré popur stocker les données d'image d'entrée (données RVB) reçues du contrôleur (520) ou les données modifiées (données R'V'B') fournies par le deuxième calculateur (540).

7. Écran à diodes électroluminescentes organiques selon la revendication 6, dans lequel le premier calculateur (530) est configuré pour produire les données de saturation des pixels (Sout) en utilisant une matrice de modification de la saturation (A).

**8.** Écran à diodes électroluminescentes organiques selon la revendication 7, dans lequel le premier calculateur (530) est conçu pour calculer des données de saturation des pixels (Sout) sur la base de données de sous-pixels comprises dans les données d'image d'entrée (données RVB).

**9.** Écran à diodes électroluminescentes organiques selon l'une des revendications 6 à 8, comprenant en outre une unité de tables de consultation de référence (545) comprenant des première et seconde tables de consultation de saturation et de luminance, dans lequel les tables de consultation de saturation et les tables de consultation de luminance sont des tables comptant une valeur de modification de saturation et une valeur de modification de luminance pour chaque valeur de saturation de pixel et dans lequel le second calculateur (540) est conçu pour sélectionner une table, parmi une première table de consultation de saturation et de luminance et une deuxième table de consultation de saturation et de luminance dans l'unité de tables de consultation de référence (545), en fonction du signal de sélection (Ssel).

**10.** Écran à diodes électroluminescentes organiques selon la revendication 9, dans lequel le deuxième calculateur (540) est configuré pour sélectionner une des tables de consultation de saturation et de luminance en fonction des données de saturation des pixels (Sout) et du signal de sélection (Ssel) et pour extraire les données modifiées (données R'V'B') des tables de consultation modifiées.

**11.** Écran à diodes électroluminescentes organiques selon l'une des revendications précédentes, dans lequel le troisième contrôleur comprend :

un analyseur d'image (610), conçu pour analyser les données d'image d'entrée (données RVB), dans lequel l'analyseur d'image (610) est conçu pour recevoir les données d'image d'entrée (données RVB) et pour en extraire les composantes de luminance pour ainsi produire des histogrammes ;
un calculateur de facteur de recadrage (620), conçu pour produire un facteur de recadrage par rapport aux données d'image d'entrée (données RVB) analysées, sur la base des histogrammes produits, et pour appliquer le facteur de recadrage aux données d'image d'entrée (données RVB) afin de produire des données d'image recadrées (données R'V'B') ; et
une unité de recadrage de l'intensité (630), conçue pour réduire un niveau général d'intensité des données d'image d'entrée (données RVB).

**12.** Écran à diodes électroluminescentes organiques selon la revendication 11, dans lequel le calculateur de facteur de recadrage (620) comprend une table de paramètres (622) qui stocke des valeurs de paramètres de conversion correspondant aux données d'histogrammes reçues de l'analyseur d'image (610).

**13.** Écran à diodes électroluminescentes organiques selon l'une des revendications 11 et 12, dans lequel le troisième contrôleur (600) comprend en outre un sélecteur (640), configuré pour transmettre sélectivement une sortie de l'unité de recadrage de l'intensité (630).

**14.** Écran à diodes électroluminescentes organiques selon l'une des revendications 11 à 13, dans lequel l'analyseur d'image (610) est configuré pour transmettre l'histogramme à l'unité de recadrage de l'intensité (630) et au calculateur de facteur de recadrage (620).

**15.** Écran à diodes électroluminescentes organiques selon la revendication 14, dans lequel l'unité de recadrage de l'intensité (630) est configurée pour recadrer une intensité totale d'images sur la base d'un schéma de distribution de l'histogramme et le calculateur de facteur de recadrage (620) est configuré pour utiliser les informations de l'histogramme comme source pour la sélection d'un paramètre influant sur le facteur de recadrage.

**16.** Écran à diodes électroluminescentes organiques selon l'une des revendications précédentes, dans lequel le quatrième contrôleur (700) comprend :

une unité de sommation de données (721), configurée pour totaliser les données d'image d'entrée (données RVB) pendant une période d'une image pour déterminer une valeur d'amplitude des données d'une image ;
une table de consultation (722), configurée pour stocker un rapport entre période d'émission et période de non-émission d'un signal de commande de l'émission correspondant à une valeur des 5 bits de poids fort de la valeur d'amplitude des données d'une image ; et

un pilote de commande de luminance (723), configuré pour produire le signal de commande de la luminance en fonction des informations stockées dans la table de consultation (722) afin d'ajuster le rapport entre période d'émission et période de non-émission du signal de commande de l'émission.

17. Procédé de commande d'un écran à diodes électroluminescentes organiques par une pluralité de signaux de balayage, une pluralité de signaux de données et une pluralité de signaux de commande de l'émission pour afficher une image sur la base de données d'image d'entrée (données RVB), le procédé comprenant les étapes consistant à :

produire un signal de détection optique (Ssens) correspondant à une intensité de la lumière ambiante ;
sélectionner une valeur de gamma correspondant au signal de sélection (Ssel), produire un signal de commande de compensation du gamma qui est conçu pour commander des tensions de gradation des signaux de données en fonction de la valeur de gamma sélectionnée et pour ainsi commander des tensions de gradation des signaux de données ; et
commander une largeur d'impulsion des signaux de commande de l'émission ;
le procédé étant **caractérisé par** l'exécution sélective des étapes consistant à :

comparer le signal de sélection (Ssel) avec une valeur de référence renseignée précédemment, produire un signal de sélection (Ssel) en réponse et fournir des données d'image d'entrée (données RVB) ou des données d'image modifiées (données R'V'B') comme signal de données, en fonction du signal de sélection (Ssel) ;

ou des étapes consistant à :

extraire des caractéristiques de l'image des données d'image d'entrée (données RVB) fournies en recevant les données d'image d'entrée (données RVB) et en en extrayant des composantes de luminance pour produire des histogrammes, afin de déterminer un facteur de recadrage en fonction des histogrammes produits, recadrer les données d'image d'entrée (données RVB) par le facteur de recadrage et produire des données d'image recadrées (données R'V'B') comme signal de données.

EP 1 962 267 B1

FIG. 1

22

# FIG. 2

# FIG. 3

VHI

21  VH  24

2bit

22  VM  25

2bit

23  VL  26

2bit

VLO

SA

7bit

27

Adder

2bit  SD

# FIG. 4

418

Upper 10 bits

Lower 16 bits

62

63

Amplitude control register

Curve control register

VHI

61

3bit

4bit 4bit 4bit

4bit

7bit

V0

70

64

First selector

Sixth selector

69

V0

V3

V1
V2
V3

65

Fifth selector

68

V7

Second selector

Fourth selector

67

V15

Gradation voltage amplifier

Third selector

66

V31

V61
V62
V63

V63

VLO

# FIG. 5A

# FIG. 5B

## FIG. 6

500

Optical sensor — $S_{sens}$ → Comparator (510) — $S_{sel}$ → Controller (520)

RGB Data → Controller

Controller — RGB Data → First calculator (530)

Saturation change matrix unit (535) — A → First calculator

First calculator — $S_{out}$ → Second calculator (540)

First calculator — $S_{sel}$ → Second calculator

Second calculator — R'G'B' Data → Memory (550)

Memory — R'G'B' Data / RGB Data → Data driver

RGB Data → Memory

Reference look-up table (545):
- First saturation LUT
- First luminance LUT
- Second saturation LUT
- Second luminance LUT

## FIG. 7A

$$A \begin{bmatrix} R_{in} \\ G_{in} \\ B_{in} \end{bmatrix} = \begin{bmatrix} R_s \\ G_s \\ B_s \end{bmatrix}$$

## FIG. 7B

$$A = \begin{bmatrix} 0.299+0.701 \times k & 0.587 \times (1-k) & 0.114 \times (1-k) \\ 0.299 \times (1-k) & 0.587+0.413 \times k & 0.114 \times (1-k) \\ 0.299 \times (1-k) & 0.587 \times (1-k) & 0.114+0.886 \times k \end{bmatrix}$$

## FIG. 7C

$$\begin{bmatrix} 0.299+0.701 \times k & 0.587 \times (1-k) & 0.114 \times (1-k) \\ 0.299 \times (1-k) & 0.587+0.413 \times k & 0.114 \times (1-k) \\ 0.299 \times (1-k) & 0.587 \times (1-k) & 0.114+0.886 \times k \end{bmatrix} \begin{bmatrix} R_{in} \\ G_{in} \\ B_{in} \end{bmatrix} = \begin{bmatrix} R_s \\ G_s \\ B_s \end{bmatrix}$$

## FIG. 7D

$$\begin{bmatrix} 0.299 & 0.587 & 0.114 \\ 0.299 & 0.587 & 0.114 \\ 0.299 & 0.587 & 0.114 \end{bmatrix} \begin{bmatrix} R_{in} \\ G_{in} \\ B_{in} \end{bmatrix} = \begin{bmatrix} R_s \\ G_s \\ B_s \end{bmatrix}$$

# FIG. 8

600

610    630    640

RGB Data → | Image analyzer | → | Intensity rescaling unit | → | Selector | → ⊗ → out

| Scaling factor calculator | ~620
| Parameter table | ~622

# FIG. 9

```
                    ( Input )
                        |
        ┌ ─ ─ ─ ─ ─ ─ ─ ┼ ─ ─ ─ ─ ─ ─ ┐
        │     ┌──────────────────┐      │
        │     │  Analyze images  │      │
        │     └──────────────────┘      │
        │              |                │
        │         ◇ Judge images ◇ ─────┼────────────┐
        └ ─ ─ ─ ─ ─ ─ ─│─ ─ ─ ─ ─ ─ ─ ─┘            │
                        |                             │
             ┌──────────────────────┐                │
             │ Select parameter value│               │
             └──────────────────────┘                │
                        |                             │
   ┌ ─ ─ ─ ─ ─ ─ ─ ─ ─ ─ ─ ─ ─ ─ ─ ─ ─ ─ ─ ─ ─ ─ ┐  │
   │ ┌──────────┐┌──────────┐┌──────────┐┌────────┐│  │
   │ │  Local   ││  Zonal   ││ Temporal ││Luminance││ │
   │ │Attenuation││Attenuation││Attenuation││ Factor ││ │
   │ │  Factor  ││  Factor  ││  Factor  ││calculation││
   │ │calculation││calculation││calculation││        ││ │
   │ └──────────┘└──────────┘└──────────┘└────────┘│  │
   └ ─ ─ ─ ─ ─ ─ ─ ─ ─ ─ ─ ─ ─ ─ ─ ─ ─ ─ ─ ─ ─ ─ ┘  │
                        |                             │
             ┌────────────────────────┐              │
             │ ScalingFactor calculation│             │
             └────────────────────────┘    ┌──────────────────┐
                        |                   │ Intensity Rescaling│
             ┌────────────────────────┐     └──────────────────┘
             │     Application        │              │
             └────────────────────────┘             │
                        |                             │
                        └──────────────┬─────────────┘
                                       |
                                 ( Output )
```

# FIG. 10

| Input images |
|---|

⇩

| Histogram analysis |
|---|

⇩

| Parameter adjustment |
|---|

Very dark image  Very bright image  General image  Graphical image

⇩        ⇩         ⇩         ⇩

| Select parameter value | | | Intensity Rescale |
|---|---|---|---|

# FIG. 11A

FIG. 11B

(a) Zonal_Para = 0.5       (b) Zonal_Para = 0.8

## FIG. 11C

## FIG. 11D

# FIG. 12

721

700

```
            Data              ──── Video Data
         summing unit         ──── Vsync
                              ──── CLK

              │ 5bit
              ▼           722              723
                    Look-up table    Luminance
Vsync ───────▶                       control driver ───▶ Luminance control signal
```

# FIG. 13

722

| Upper 5 bit value | Emission rate | Emission ratio | Luminance | Emission control signal width |
|---|---|---|---|---|
| 0 | 0% | 100% | 300 | 325 |
| 1 | 4% | 100% | 300 | 325 |
| 2 | 7% | 100% | 300 | 325 |
| 3 | 11% | 100% | 300 | 325 |
| 4 | 14% | 100% | 300 | 325 |
| 5 | 18% | 100% | 300 | 325 |
| 6 | 22% | 100% | 300 | 325 |
| 7 | 25% | 100% | 300 | 325 |
| 8 | 29% | 100% | 300 | 325 |
| 9 | 33% | 100% | 300 | 325 |
| 10 | 36% | 100% | 300 | 325 |
| 11 | 40% | 99% | 297 | 322 |
| 12 | 43% | 98% | 295 | 320 |
| 13 | 47% | 96% | 287 | 311 |
| 14 | 51% | 93% | 280 | 303 |
| 15 | 54% | 89% | 268 | 290 |
| 16 | 58% | 85% | 255 | 276 |
| 17 | 61% | 81% | 242 | 262 |
| 18 | 65% | 76% | 228 | 247 |
| 19 | 69% | 72% | 217 | 235 |
| 20 | 72% | 69% | 206 | 223 |
| 21 | 76% | 65% | 196 | 212 |
| 22 | 79% | 62% | 186 | 202 |
| 23 | 83% | 60% | 179 | 194 |
| 24 | 87% | 57% | 172 | 186 |
| 25 | 90% | 55% | 165 | 179 |
| 26 | 94% | 53% | 159 | 172 |
| 27 | 98% | 51% | 152 | 165 |
| 28 | – | – | – | – |
| 29 | – | – | – | – |
| 30 | – | – | – | – |
| 31 | – | – | – | – |

EP 1 962 267 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1717788 A2
- US 20060055828 A1
- US 2006055335 A1
- US 20030210256 A1